# EUROPÄISCHE PATENTSCHRIFT

(11) **EP 4 275 499 B1**
(45) Veröffentlichungstag und Bekanntmachung des Hinweises auf die Patenterteilung: **17.07.2024**
(21) Anmeldenummer: 22172751.4
(22) Anmeldetag: 11.05.2022
(51) Int. Cl.: A21B 5/02

(54) **BACKVORRICHTUNG ZUR HERSTELLUNG UNTER ÜBERDRUCK GEBACKENER FORMKÖRPER**
BAKING APPARATUS FOR MAKING PRODUCTS BAKED UNDER PRESSURE
DISPOSITIF DE CUISSON POUR LA FABRICATION DE PRODUITS CUITS SOUS PRESSION

(43) Veröffentlichungstag der Anmeldung: 15.11.2023
(73) Patentinhaber: Bühler Food Equipment GmbH, 2100 Leobendorf (AT)
(72) Erfinder: Süss, Daniel, 3430 Tulln (AT); Sachsenhofer, Johann, 1220 Wien (AT); Steinböck, Michael, 3042 Holzleiten (AT); Osmic, Fadmar, 1120 Wien (AT)
(74) Vertreter: Puchberger & Partner Patentanwälte

(56) Entgegenhaltungen:
- WO-A1-2012/152778
- WO-A2-2009/100873
- DE-A1- 19 707 730
- DE-A1- 3 233 519
- US-A1- 2009 200 291

## Beschreibung

Die Erfindung betrifft eine Backvorrichtung gemäß dem Oberbegriff des unabhängigen Patentanspruchs.

Zur industriellen Herstellung von gebackenen Formkörpern, insbesondere Waffelprodukten, ist es bekannt, einen im Wesentlichen flüssigen Waffelteig, der im unausgebackenen Zustand etwa 45-70% Wasser enthält, in eine geöffnete Überdruckbackform einzubringen, wobei die Überdruckbackform aus zwei Backplatten einer Backzange gebildet ist. In weiterer Folge wird die Backzange nach dem Einbringen der Backmasse geschlossen und durch einen beheizten Backraum befördert. Durch das Erhitzen der Backzange, deren Backplatten, insbesondere der Überdruckbackform und damit auch der Backmasse, verdampfen die flüchtigen Bestandteile der Backmasse. Dabei entsteht in der Backzange ein erhöhter Druck, dessen Kräfte auf die Backplatten der Backzange wirken.

Aus dem Stand der Technik sind unterschiedliche Backvorrichtungen zur Herstellung derartiger Formkörper bekannt. Beispielsweise sind herkömmliche Backvorrichtungen und Backplatten bekannt, welche durch mit Gas betriebene Heizvorrichtungen beheizt werden. Derartige Backplatten weisen an ihrer Rückseite Rippen auf, um die Wärmeübertragung von den Heizvorrichtungen auf die Backplatten zu verbessern. Nachteilige an derartigen Backvorrichtungen ist, dass diese meist nur mit nicht erneuerbaren Rohstoffen, wie beispielsweise Gas, betrieben werden und der Backofen somit Verbrennungsprodukte emittiert.

In der Patentanmeldung WO 2012152778 A1 ist ein Backofen mit einer im Backofen umlaufenden, endlosen Backzangenkette offenbart, dessen Backzangen und insbesondere dessen Backplatten induktiv beheizbar sind und Spannvorrichtungen aufweisen, die die Rückenflächen der Backplatten überragen. Der Patentanmeldung DE3233519A1 ist eine, insbesondere selbsttragende, Backplatte zu entnehmen, die zur Vorspannung der Backplatten gegen den zwischen den Backplatten auftretenden Dampfdruck Spannvorrichtungen aufweisen.

Zur Verbesserung der Effizienz derartiger Backvorrichtungen ist es bekannt, die Heizvorrichtungen als Induktionsheizvorrichtungen auszubilden.

Die bei herkömmlichen Backvorrichtungen eingesetzten rippenartig ausgestalteten Backplattenvorrichtungen können aber nicht effizient mittels Induktion beheizt werden.

Es sind aber aus dem Stand der Technik auch Backplattenvorrichtungen bekannt, welche mittels Induktionsheizvorrichtungen beheizt werden. Bei derartigen Backvorrichtungen sind die Backplatten, die die Überdruckbackform bilden, der Backzangen immer in einer Rahmenkonstruktion der Backzange angeordnet, wobei die Rahmenkonstruktion den beim Backen der Backmasse in der Überdruckbackform entstehenden Druck aufnimmt. Mit anderen Worten werden hierbei die notwendige Steifigkeit der Backplatten und die notwendige Vorspannung der Backzangen durch die Rahmenkonstruktion erreicht. Um eine Aufnahme der Kräfte und die Vorspannung zu ermöglichen, sind dafür zumindest die Rückenflächen der Backplatten immer mit der Rahmenkonstruktion verbunden, wodurch aber zumindest die Rückenflächen von der Rahmenkonstruktion überragt sind.

Nachteilig an derartigen Konstruktionen ist, dass die außenliegende Rahmenkonstruktion bei der induktiven Beheizung mit aufgeheizt werden muss und die Beheizung der Backzange beeinträchtigt. Der Energiebedarf einer derartigen Backvorrichtung ist somit hoch.

Aufgabe der Erfindung ist es, die Nachteile des Standes der Technik zu überwinden.

Insbesondere ist es Aufgabe der Erfindung, eine Backvorrichtung mit Backplatten zu schaffen, welche energieeffizient mittels Induktion beheizbar ist.

Die erfindungsgemäße Aufgabe wird durch die Merkmale des unabhängigen Patentanspruchs 1 gelöst.

Die Erfindung betrifft eine Backvorrichtung, insbesondere Backofen, zur Herstellung unter Überdruck gebackener Formkörper, bevorzugt knusprig spröder Waffeln, aus einer Backmasse.

Die Backvorrichtung umfasst einen Endlosförderer und mehrere entlang des Endlosförderers vorgesehene Backplattenvorrichtungen, wobei die Backplattenvorrichtungen jeweils zwei, Backplatten und beidseitig, an den Backplatten angeordnete Verbindungsvorrichtungen umfassen.

Gegebenenfalls sind die Verbindungsvorrichtungen jeweils an der Schmalseite der Backplattenvorrichtung, insbesondere an der Schmalseite der Backplatten, angeordnet.

Erfindungsgemäß ist vorgesehen, dass die Verbindungsvorrichtungen derart ausgestaltet sind dass die Backplattenvorrichtung öffenbar, schließbar und in der geschlossenen Stellung zur Bildung einer Überdruckbackform verriegelbar ausgebildet ist.

Erfindungsgemäß ist vorgesehen, dass die Backplatten jeweils an einer Seite eine der Überdruckbackform zugewandte Backfläche und auf der dieser Seite gegenüberliegenden Seite, insbesondere der Rückseite der Backplatte, mindestens eine Rückenfläche aufweisen.

Erfindungsgemäß ist vorgesehen, dass an der Seite der Backplatten, welche der Überdruckbackform zugewandt ist, eine Backfläche vorgesehen ist.

Erfindungsgemäß ist vorgesehen, dass an der Seite der Backplatten, welche der Überdruckbackform abgewandt ist, insbesondere der Rückseite der Backplatten, mindestens eine Rückenfläche vorgesehen ist.

Mit anderen Worten weist die Backplatte jeweils eine Backfläche und mindestens eine Rückenfläche auf, welche einander insbesondere gegenüberliegen.

Erfindungsgemäß ist vorgesehen, dass die Backplattenvorrichtung, insbesondere die Backplatten, derart ausgestaltet ist, dass sie durch eine über einen Induktorspalt wirkende Induktionsheizvorrichtung aufheizbar ist.

Erfindungsgemäß ist vorgesehen, dass die mindestens eine Rückenfläche der Backplattenvorrichtung, insbesondere die mindestens eine Rückenfläche der Backplatte, als eine Seite des Induktorspaltes ausgebildet ist.

Gegebenenfalls ist vorgesehen, dass die mindestens eine Rückenfläche der Backplatte dazu eingerichtet ist, als eine Seite des Induktorspaltes zu wirken und/oder eine Seite des Induktorspaltes zu bilden.

Gegebenenfalls ist vorgesehen, dass die mindestens eine Rückenfläche der Backplatte eine Seite des Induktorspaltes bildet.

Erfindungsgemäß ist vorgesehen, dass die mindestens eine Rückenfläche der Backplatten einer Ebene folgt und insbesondere ebenenförmig ausgebildet ist.

Gegebenenfalls ist vorgesehen, dass die mindestens eine Rückenfläche der Backplatten jeweils oder alle Rückenflächen, insbesondere der Rückseite, der Backplatte zusammen einer Ebene folgen und insbesondere ebenenförmig ausgebildet sind.

Erfindungsgemäß ist vorgesehen, dass die Backplatten jeweils mindestens eine Spannvorrichtung zur Vorspannung der jeweiligen Backplatte gegen den beim Backen der Backmasse in der Überdruckbackform entstehenden Druck aufweisen.

Erfindungsgemäß ist vorgesehen, dass die mindestens eine Spannvorrichtung zwischen der mindestens einen Rückenfläche und der Backfläche, insbesondere innerhalb der Backplatte, angeordnet ist.

Gegebenenfalls ist vorgesehen, dass die gebackenen Formkörper, insbesondere die Waffeln, aus Backmasse herstellbar sind. Bevorzugt wird die Backmasse, insbesondere in der Überdruckbackform, der Backzange zu gebackenen Formkörpern ausgebacken. Gegebenenfalls wird die Überdruckbackform durch die Backflächen der beiden Backplatten der Backplattenvorrichtung gebildet.

Die Backplattenvorrichtung, insbesondere die Backplatten, können selbsttragend und/oder trägerlos ausgestaltet sein.

Insbesondere kann vorgesehen sein, dass die Backplattenvorrichtung ausschließlich die zwei die Überdruckbackform bildenden Backplatten, die zwei an den Backplatten angeordneten Verbindungsvorrichtungen und gegebenenfalls mindestens eine Spannvorrichtung pro Backplatte umfasst.

Die Backplattenvorrichtung, insbesondere die Backplatten, sind dazu eingerichtet durch Induktion, insbesondere durch eine Induktionsheizvorrichtung, aufgeheizt zu werden.

Die Induktionsheizvorrichtung kann von der Backplattenvorrichtung beabstandet an einer die Backplattenvorrichtung umfassenden Backvorrichtung angeordnet sein. Insbesondere ist zwischen der Backplatte, insbesondere der Rückseite der Backplatte, bevorzugt der mindestens einen Rückenfläche der Backplatte, und der Induktionsheizvorrichtung der Induktorspalt vorgesehen.

Die Induktionsheizvorrichtung ist dazu eingerichtet, die Backplattenvorrichtung, insbesondere die Backplatte, bevorzugt die mindestens eine Rückenfläche der Backplatte, über den Induktorspalt zu beheizen.

Der Induktorspalt kann als länglicher schmaler Zwischenraum ausgebildet sein, welcher entlang seiner Längserstreckung einerseits von der mindestens einen Rückenfläche, insbesondere der Rückseite, der Backplatten und andererseits von der Induktionsheizvorrichtung, insbesondere der zur mindestens einen Rückenfläche gewandten Seite der Induktionsheizvorrichtung, begrenzt ist.

Mit anderen Worten kann der Induktorspalt als Zwischenraum zwischen der Induktionsheizvorrichtung, insbesondere der zur mindestens einen Rückenfläche gewandten Seite der Induktionsheizvorrichtung, und der mindestens einen Rückenfläche der Backplatte ausgebildet sein.

Gegebenenfalls ist vorgesehen, dass jede Backplatte jeweils mindestens eine Spannvorrichtung aufweist.

Die mindestens eine Spannvorrichtung kann zur Vorspannung der jeweiligen Backplatte gegen den beim Backen der Backmasse in der Überdruckbackform entstehenden Druck ausgebildet sein.

Gegebenenfalls ist vorgesehen, dass die mindestens eine Spannvorrichtung innerhalb der Backplatte, insbesondere innerhalb der Abmessungen der Backplatte, angeordnet ist. Mit anderen Worten kann vorgesehen sein, dass die Spannvorrichtung überragungsfrei in und/oder an der Backplatte angeordnet ist.

Insbesondere ist die mindestens eine Spannvorrichtung derart in und/oder an der Backplatte angeordnet, dass die mindestens eine Spannvorrichtung weder die mindestens eine Rückenfläche, insbesondere die Rückseite, noch die Backfläche überragt.

Die Backplattenvorrichtung kann somit eine im Wesentlichen ebene, insbesondere glatte, Rückseite und/oder Rückenfläche aufweisen. Dadurch kann ein konstanter Wärmeeintrag in die Backplatte durch die Induktionsheizvorrichtung ermöglicht werden.

Eine mit einer derart ausgestalteten Backplattenvorrichtung ausgerüstete Backvorrichtung kann somit wesentlich energieeffizienter betrieben werden, als eine Backvorrichtung, welche herkömmliche Backplatten umfasst, die in einer Rahmenkonstruktion angeordnet sind.

Im Rahmen der Erfindung kann unter einer vorgespannten Backplatte eine Backplatte verstanden werden, welche derart ausgestaltet, insbesondere gebogen, ist, dass in der Überdruckbackform gebackene Formkörper erzeugbar sind, welche im Wesentlichen gleich dick und/oder im Wesentlichen ident ausgebildet sind. Mit anderen Worten kann durch die Vorspannung der Backplatte eine Gleichförmigkeit der Waffelblattdicke, insbesondere über die gesamte Ausdehnung, der in der Überdruckbackform gebackenen Formkörper, insbesondere des Waffelblattes, ermöglicht werden.

Im Rahmen der Erfindung kann unter Vorspannung der Backplatte eine vorab definierte Verbiegung und/oder vorab definierte Verformung der Backplatte verstanden werden.

Die Vorspannung der Backplatte ist gegebenenfalls mittels der Spannvorrichtung einstellbar.

Gegebenenfalls ist vorgesehen, dass der Normalabstand zwischen der Backfläche und der mindestens einen Rückenfläche, insbesondere der Rückseite, im Bereich von 4 cm bis einschließlich 10 cm liegt.

Insbesondere kann der Normalabstand zwischen der Backfläche und der Rückseite, insbesondere der mindestens einen Rückenfläche, einer Backplatte 4 cm, 4,25 cm, 4,5 cm, 4,75 cm, 5 cm, 5,25 cm, 5,5 cm, 5,75 cm, 6 cm, 6,25 cm, 6,5 cm, 6,75 cm, 7 cm, 7,25cm, 7,5cm, 7,75cm, 8cm, 8,25cm, 8,5 cm, 8,75cm, 9cm, 9,25cm, 9,5cm, 9,75cm oder 10cm betragen.

Gegebenenfalls ist vorgesehen, dass die, insbesondere eine Seite des Induktorspaltes bildende/n, Rückenfläche/n der Backplatte/n, insbesondere im Wesentlichen, plan ausgebildet ist oder sind.

Gegebenenfalls ist vorgesehen, dass die, insbesondere eine Seite des Induktorspaltes bildende/n, Rückenfläche/n der Backplatte/n, insbesondere im Wesentlichen, erhebungsfrei ausgebildet ist oder sind.

Gegebenenfalls ist vorgesehen, dass die, insbesondere eine Seite des Induktorspaltes bildende/n, Rückenfläche/n der Backplatte/n, insbesondere im Wesentlichen, glatt ausgebildet ist oder sind.

Gegebenenfalls ist vorgesehen, dass die, insbesondere eine Seite des Induktorspaltes bildende/n, Rückenfläche/n der Backplatte/n, insbesondere im Wesentlichen, rippenlos ausgebildet ist oder sind.

Gegebenenfalls ist vorgesehen, dass die, insbesondere eine Seite des Induktorspaltes bildende/n, Rückenfläche/n der Backplatte/n einer Ebene folgt oder folgen und insbesondere ebenenförmig ausgebildet ist oder sind.

Insbesondere ist vorgesehen, dass der zwischen den Verbindungsvorrichtungen liegende Bereich der Rückseite/n, insbesondere der Rückenfläche/n, der Backplatte/n, insbesondere im Wesentlichen, ebenenförmig, plan, erhebungsfrei, glatt und/oder rippenlos ausgebildet ist oder sind und insbesondere einer Ebene folgt oder folgen.

Im Rahmen der vorliegenden Erfindung kann unter einer glatten Rückenfläche verstanden werden, dass die Rückenfläche eine Rauheit aufweist, deren Ra-Wert kleiner 12,5 µm, bevorzugt kleiner 6,3 µm und besonders bevorzugt kleiner 3,2 µm beträgt. Der Ra-Wert wird nach DIN EN 150 4288: 1998-04 gemessen.

Gegebenenfalls kann die mindestens eine Rückenfläche zwischen den Verbindungsvorrichtungen angeordnet sein.

Im Rahmen der vorliegenden Erfindung kann unter der Angabe, dass eine Rückenfläche der Backplatte erhebungsfrei ausgebildet ist, gegebenenfalls verstanden werden, dass die Rückenfläche der Backplatte nicht von der Backplatte, der mindestens einen Spannvorrichtung, dem mindestens einen Spannmittel, dem mindestens einen Spannteil, der mindestens einen Schraube, dem mindestens einen Distanzmittel, der mindestens einen Hülse, der mindestens einen Passscheibe und/oder der mindestens einen Stellschraube überragt wird.

Gegebenenfalls ist vorgesehen, dass die mindestens eine Rückenfläche der Backplatte, der Ausgestaltung der Heizvorrichtung, insbesondere der Induktionsheizvorrichtung, bevorzugt dem Induktor der Induktionsheizvorrichtung, folgt.

Gegebenenfalls ist vorgesehen, dass 80 % bis 100 %, insbesondere 80 % bis 95 %, der Rückseite der Backplatte/n plan, erhebungsfrei, glatt und/oder rippenlos ausgebildet ist oder sind.

Die Rückseite kann der Backfläche gegenüberliegen. Gegebenenfalls ist vorgesehen, dass die mindestens eine Rückenfläche oder alle Rückenflächen an der Rückseite der Backplatte angeordnet ist oder sind.

Gegebenenfalls ist vorgesehen, dass die Rückseite durch die mindestens eine Rückenfläche oder alle Rückenflächen gebildet ist oder die Rückseite die mindestens eine Rückenfläche oder alle Rückenflächen umfasst.

Gegebenenfalls ist vorgesehen, dass 80 % bis 100 %, insbesondere 80 % bis 95 %, der Rückseite der Backplatte/n durch plane, erhebungsfreie, glatte und/oder rippenlose Rückenflächen gebildet ist oder sind.

Insbesondere ist vorgesehen, dass 80%, 81%, 82%, 83%, 84%, 85%, 86%, 87%, 88%, 89%, 90%, 91%, 92%, 93%, 94%, 95%, 96%, 97%, 98%, 99% und/oder 100% der Rückseite der Backplatten plan, erhebungsfrei, glatt und/oder rippenlos ausgebildet sind.

Insbesondere ist vorgesehen, dass lediglich 20 %, insbesondere lediglich 19%, 18%, 17%, 16%, 15%, 14%, 13%, 12%, 11%, 10%, 9%, 8%, 7%, 6%, 5%, 4%, 3%, 2% und/oder 1% der Rückseite der Backplatten als Nut, Ausnehmung, Loch und/oder Vertiefung ausgebildet sind.

Gegebenenfalls nehmen die an der Rückseite angeordneten Nuten, Ausnehmungen, Löcher und/oder Vertiefungen lediglich 20 %, insbesondere lediglich 19%, 18%, 17%, 16%, 15%, 14%, 13%, 12%, 11%, 10%, 9%, 8%, 7%, 6%, 5%, 4%, 3%, 2% und/oder 1% der Rückseite ein.

Gegebenenfalls ist vorgesehen, dass die Backplatten, insbesondere deren mindestens eine Rückenfläche, bevorzugt ausschließlich, von den Verbindungsvorrichtungen überragt werden.

Gegebenenfalls ist vorgesehen, dass die Backplatten einstückig ausgebildet sind.

Insbesondere besteht jede Backplatte aus einem Stück.

Gegebenenfalls ist an und/oder innerhalb der einstückigen Backplatte mindestens eine Spannvorrichtung zur Vorspannung der einstückigen Backplatte angeordnet und/oder vorgesehen.

Gegebenenfalls ist an der einstückigen Backplatte, insbesondere an der Schmalseite der einstückigen Backplatte, eine Verbindungsvorrichtung angeordnet und/oder vorgesehen.

Gegebenenfalls ist vorgesehen, dass an der Rückseite, insbesondere an der mindestens einen Rückenfläche, der Backplatte mindestens ein Spannbereich, insbesondere eine Ausnehmung und/oder eine Nut, vorgesehen ist.

Der mindestens eine Spannbereich kann gegebenenfalls als geschwächter Bereich, als Schwachstelle und/oder als Sollbiegestelle der Backplatte ausgebildet sein. Insbesondere kann der Querschnitte der Backplatte in mindestens einem Spannbereich geringer sein als in den anderen Bereichen der Backplatte.

Insbesondere ist der mindestens eine Spannbereich derart ausgestaltet, dass die Backplatte in dem mindestens einen Spannbereich leichter verformbar und/oder biegbar ist als in den anderen Bereichen der Backplatte.

Gegebenenfalls ist vorgesehen, dass der mindestens eine Spannbereich, insbesondere im Wesentlichen, mittig an der Rückseite, insbesondere der mindestens einen Rückenfläche, der Backplatte vorgesehen ist.

Insbesondere kann der mindestens eine Spannbereich an der Rückseite in einem Bereich zwischen 45 % und 55 % gemessen in Richtung der Längserstreckung der Backplatte liegen.

Gegebenenfalls ist vorgesehen, dass sich der Spannbereich über die Breite, insbesondere über die gesamte Breite, der Rückseite, insbesondere der mindestens einen Rückenfläche, erstreckt.

Der Spannbereich, insbesondere die Ausnehmung oder die Nut, kann im Wesentlichen normal oder schräg, insbesondere in einem Winkel im Bereich von einschließlich 30° bis einschließlich 60°, bevorzugt 45°, auf die Rückseite und/oder die mindestens eine Rückenfläche stehend an der Backplatte vorgesehen sein. Insbesondere kann der Spannbereich, bevorzugt im Wesentlichen, normal stehend auf die Längserstreckung der Backplatte an der Rückenfläche vorgesehen sein.

Insbesondere kann die Backplatte viereckig, insbesondere rechteckig, sein.

Gegebenenfalls ist vorgesehen, dass die mindestens eine Spannvorrichtung den mindestens einen Spannbereich überragt und/oder durchdringt.

Gegebenenfalls ist vorgesehen, dass der mindestens einen Spannbereich ausschließlich von der die mindestens eine Spannvorrichtung überragt und/oder durchdrungen wird.

Gegebenenfalls ist vorgesehen, dass die mindestens eine Spannvorrichtung, insbesondere die Spannmittel der Spannvorrichtung, derart ausgestaltet ist, um die Backplatte vorzuspannen.

Insbesondere ist vorgesehen, dass die mindestens eine Spannvorrichtung dazu eingerichtet ist, die Backplatte vorzuspannen.

Gegebenenfalls ist vorgesehen, dass die Rückseite, insbesondere die mindestens eine Rückenfläche, der Backplatte außer in dem mindestens einen Spannbereich und dem mindestens einen Spannvorrichtungsbereich ebenenförmig, plan und/oder glatt, ausgestaltet ist.

Gegebenenfalls ist vorgesehen, dass die Rückseite, insbesondere die mindestens eine Rückenfläche, der Backplatte ebenenförmig, plan und/oder glatt, ausgestaltet und an der Rückseite, insbesondere der mindestens einen Rückenfläche, bevorzugt ausschließlich, der mindestens eine Spannbereich und/oder der mindestens eine Spannvorrichtungsbereich angeordnet ist.

Der mindestens eine Spannvorrichtungsbereich kann zur Aufnahme der mindestens einen Spannvorrichtung ausgebildet und kann gegebenenfalls als Vertiefung, Ausnehmung und/oder Loch ausgestaltet sein.

Gegebenenfalls ist vorgesehen, dass der mindestens eine Spannvorrichtungsbereich zwischen der Rückseite, insbesondere der mindestens einen Rückenfläche, und der Backfläche, insbesondere innerhalb, der Backplatte, angeordnet ist.

Gegebenenfalls ist vorgesehen, dass die Rückseite einen ersten Abschnitt aufweist, welcher durch eine ebenenförmige, plane und/oder glatte Rückenfläche gebildet ist.

Gegebenenfalls ist vorgesehen, dass die Rückseite einen zweiten Abschnitt aufweist, in welchem der mindestens eine Spannbereich und der mindestens eine Spannvorrichtungsbereich vorgesehen sind. Der zweite Abschnitt kann mindestens eine Vertiefung, eine Ausnehmung und/oder ein Loch aufweisen, in welchem insbesondere die mindestens eine Spannvorrichtung angeordnet ist.

Insbesondere ist vorgesehen, dass der erste Abschnitt zwischen 80% und 100%, insbesondere 80%, 81%, 82%, 83%, 84%, 85%, 86%, 87%, 88%, 89%, 90%, 91%, 92%, 93%, 94%, 95%, 96%, 97%, 98%, 99% und/oder 100% der Rückseite der Backplatten einnimmt.

Insbesondere ist vorgesehen, dass der zweite Abschnitt zwischen 1% und 20%, insbesondere 20%, 19%, 18%, 17%, 16%, 15%, 14%, 13%, 12%, 11%, 10%, 9%, 8%, 7%, 6%, 5%, 4%, 3%, 2% und/oder 1% der Rückseite der Backplatten einnimmt.

Gegebenenfalls ist vorgesehen, dass die mindestens eine Spannvorrichtung zur Vorspannung der Backplatte mit, insbesondere zwei, Bereichen der Backplatten in Eingriff ist, sodass gegebenenfalls diese Bereiche der Backplatten zueinander gespannt oder spannbar sind.

Gegebenenfalls ist vorgesehen, dass die mindestens eine Spannvorrichtung zur Vorspannung der Backplatte mit, insbesondere zwei, Bereichen der Backplatten in Eingriff ist, welche an den Spannbereich angrenzen, welche durch den Spannbereich getrennt und/oder welche über den Spannbereich miteinander verbunden sind, sodass gegebenenfalls diese Bereiche der Backplatten zueinander gespannt oder spannbar sind.

Gegebenenfalls ist vorgesehen, dass die mindestens eine Spannvorrichtung dazu eingerichtet ist, die über den Spannbereich verbundenen Rückenflächen der Backplatte zueinander zu spannen.

Gegebenenfalls ist vorgesehen, dass die mindestens eine Spannvorrichtung zur Vorspannung der Backplatte eingerichtet ist, und bevorzugt dazu eingerichtet ist die über den Spannbereich verbundenen Bereiche, insbesondere die Bereiche der Rückenfläche, der Backplatte zueinander zu spannen.

Gegebenenfalls ist vorgesehen, dass die mindestens eine Spannvorrichtung mit den über den Spannbereich verbundenen Bereichen, insbesondere den Bereichen der Rückenfläche, der Backplatten in Eingriff ist, sodass die Bereiche der Backplatten zueinander gespannt oder spannbar sind.

Gegebenenfalls ist vorgesehen, dass der mindestens eine Spannbereich die Rückseite der Backplatte in einen ersten Bereich und einen zweiten Bereich, insbesondere in zwei Rückenflächen, teilt.

Gegebenenfalls ist vorgesehen, dass mindestens ein weiterer Spannbereich die Rückseite der Backplatte in einen weiteren ersten Bereich und einen weiteren zweiten Bereich teilt.

Gegebenenfalls ist vorgesehen, dass die, insbesondere durch die mindestens eine Spannvorrichtung, vorgespannte/n Backplatte/n selbst als Biegeträger zur Aufnahme der beim Backen in der Überdruckbackform ausgehenden Druckkräfte wirkt oder wirken.

Die, insbesondere vorgespannte, Backplatte kann derart ausgestaltet sein, die beim Backen der Backmasse entstehenden Druckkräfte aufzunehmen.

Gegebenenfalls ist vorgesehen, dass die mindestens eine Spannvorrichtung derart ausgestaltet ist, dass die Vorspannung der Backplatte einstellbar ist.

Insbesondere kann die mindestens eine Spannvorrichtung dazu eingerichtet sein, die Vorspannung der Backplatte auf einen vorab definierten Wert einzustellen.

Gegebenenfalls ist vorgesehen, dass die mindestens eine Spannvorrichtung mindestens ein Spannmittel, insbesondere mindestens eine Schraube und/oder mindestens einen, insbesondere U-förmigen und/oder L-förmigen, Spannteil, umfasst.

Gegebenenfalls ist vorgesehen, dass die mindestens eine Spannvorrichtung mindestens ein Distanzmittel, insbesondere eine Distanzscheibe, mindestens ein Einlageblech, mindestens eine Passscheibe, mindestens eine Stellschraube und/oder mindestens eine Hülse, umfasst.

Insbesondere ist vorgesehen, dass durch das Distanzmittel die, insbesondere maximale, Vorspannung der Backplatte definiert und/oder begrenzt ist. Gegebenenfalls kann die Verformung des Spannbereichs und/oder die Einschraubtiefe der Schraube durch das Distanzmittel begrenzt und/oder vorab definiert sein.

Gegebenenfalls kann vorgesehen sein, dass das Distanzmittel, insbesondere zur Begrenzung der Vorspannung der Backplatte, in dem jeweiligen Spannbereich, der jeweiligen Nut und/oder der jeweiligen Ausnehmung angeordnet ist.

Die erreichbare, insbesondere maximale, Vorspannung der Backplatte durch das Spannmittel kann somit gegebenenfalls durch das Distanzmittel vorab definiert und/oder begrenzt werden.

Insbesondere kann die Verformung der Backplatte, bevorzugt des Spannbereichs, besonderes bevorzugt der Nut und/oder Ausnehmung, durch das darin angeordnete Distanzmittel begrenzt sein.

Insbesondere kann vorgesehen sein, dass das Spannmittel soweit festziehbar ist, bis der mindestens eine Spannbereich mit dem Distanzmittel formschlüssig in Eingriff steht und/oder die Seitenflächen des mindestens einen Spannbereichs an dem Distanzmittel anliegen.

Gegebenenfalls ist vorgesehen, dass das Distanzmittel einen Schlitz aufweist und/oder geschlitzt ausgeführt ist.

Gemäß einer bevorzugten Ausführungsform der Backplattenvorrichtung kann vorgesehen sein, dass an den Rückseiten, insbesondere der ebenenförmigen, planen und/oder glatten Rückenflächen, jeweils, insbesondere ausschließlich, ein Spannbereich und vier Spannvorrichtungsbereiche vorgesehen sind. Der Spannbereich kann als Nut ausgebildet und mittig an der Rückseite, insbesondere der Rückenfläche, der Backplatte vorgesehen sein.

Die Spannvorrichtungen können in den Spannvorrichtungsbereichen angeordnet sein, welche als Loch ausgestaltet sein können. Diese Spannvorrichtungen können jeweils als Spannmittel eine Schraube umfassen.

Die in dem jeweiligen Loch angeordneten Spannmittel, insbesondere die Schrauben, können den Spannbereich durchdringen und überragen, sodass gegebenenfalls die Schrauben die an den Spannbereich angrenzenden Bereiche der Backplatte verbinden.

Der Spannbereich und/oder die Spannvorrichtungsbereiche kann oder können mit der Rückseite, insbesondere der Rückenfläche, einen Winkel im Bereich von 30° bis einschließlich 60°einschließen.

Durch das Festziehen der Schrauben können die Bereiche zueinander spannbar sein und ist gegebenenfalls die Vorspannung der Backplatte einstellbar.

In dem Spannbereich kann ein Distanzmittel der Spannvorrichtung angeordnet sein, welches die maximale Vorspannung der Backplatte begrenzt.

Gemäß einer weiteren bevorzugten Ausführungsform kann vorgesehen sein, dass die Rückseite, insbesondere die Rückenfläche, ebenenförmig, plan und/oder glatt ausgebildet sind und/oder an der Rückseite, insbesondere der Rückenfläche, jeweils, insbesondere ausschließlich, jeweils zwei Spannvorrichtungen angeordnet sind. Diese Spannvorrichtungen können jeweils als Spannmittel zwei Schrauben und jeweils einen U-förmigen Spannteil umfassen.

Der U-förmige Spannteil kann den Spannbereich überragen und durch jeweils eine Schraube mit den jeweils an den Spannbereich angrenzenden Bereichen verbunden sein. Die zwei U-förmigen Spannteile einer Backplatte können, insbesondere um 180°, verdreht zueinander an der Rückseite, insbesondere der Rückenfläche, angeordnet sein.

Insbesondere ist der Spannvorrichtungsbereich, insbesondere die Ausnehmung, in welcher die Spannvorrichtung, insbesondere der U-förmige Spannteil, angeordnet ist, zumindest teilweise keilförmig und/oder zum Eingriff mit dem Spannteil ausgestaltet. Bevorzugt ist der U-förmige Spannteil zumindest teilweise keilförmig und/oder zum Eingriff mit dem Spannvorrichtungsbereich ausgestaltet.

Durch das Festziehen der Schrauben kann die Vorspannung der Backplatte einstellbar sein. Gegebenenfalls ist der keilförmige Teil des Spannteils entlang des keilförmigen Teils des Spannvorrichtungsbereichs durch das Festziehen der Schrauben bewegbar, sodass die Vorspannung der Backplatte einstellbar ist.

Gegebenenfalls ist vorgesehen, dass an der Rückseite, insbesondere an der mindestens einen Rückenfläche, der Backplatte/n zwei bis einschließlich zehn Spannbereiche vorgesehen sind.

Gegebenenfalls ist vorgesehen, dass an der Rückseite, insbesondere der/den Rückenfläche/n, der Backplatte/n zwei, drei, vier, fünf, sechs, sieben, acht, neun oder zehn Spannbereiche vorgesehen sind.

Gegebenenfalls ist vorgesehen, dass an der Rückseite, insbesondere der/den Rückenfläche/n, der Backplatte/n zwei bis einschließlich zehn Ausnehmungen und/oder zwei bis einschließlich zehn Nuten vorgesehen sind.

Gegebenenfalls ist vorgesehen, dass an der Rückseite, insbesondere der/den Rückenfläche/n, der Backplatte/n zwei, drei, vier, fünf, sechs, sieben, acht, neun oder zehn Ausnehmungen vorgesehen sind.

Gegebenenfalls ist vorgesehen, dass an der Rückseite, insbesondere der/den Rückenfläche/n, der Backplatte/n zwei, drei, vier, fünf, sechs, sieben, acht, neun oder zehn Nuten vorgesehen sind.

Gegebenenfalls ist vorgesehen, dass die Backplatte/n jeweils, zwei bis einschließlich zehn Spannvorrichtungen zur Vorspannung der jeweiligen Backplatte/n gegen den beim Backen der Backmasse in der Überdruckbackform entstehenden Druck aufweisen.

Gegebenenfalls ist vorgesehen, dass die Backplatte/n jeweils, zwei, drei, vier, fünf, sechs, sieben, acht, neun oder zehn Spannvorrichtungen zur Vorspannung der jeweiligen Backplatte/n gegen den beim Backen der Backmasse in der Überdruckbackform entstehenden Druck aufweisen.

Gegebenenfalls ist vorgesehen, dass die zwei bis einschließlich zehn Spannvorrichtungen zwischen der mindestens einen oder den Rückenfläche/n und der oder den Backfläche/n, insbesondere innerhalb, der Backplatte/n, angeordnet sind.

Gegebenenfalls ist vorgesehen, dass die zwei, drei, vier, fünf, sechs, sieben, acht, neun oder zehn Spannvorrichtungen zwischen der mindestens einen oder den Rückenfläche/n und der oder den Backfläche/n, insbesondere innerhalb, der Backplatte/n, angeordnet sind.

Gegebenenfalls ist vorgesehen, dass die zwei bis einschließlich zehn Spannvorrichtungen den jeweiligen mindestens einen Spannbereich überragen und/oder durchdringen.

Gegebenenfalls ist vorgesehen, dass die zwei, drei, vier, fünf, sechs, sieben, acht, neun oder zehn Spannvorrichtungen den jeweiligen mindestens einen Spannbereich überragen und/oder durchdringen.

Gegebenenfalls ist vorgesehen, dass die Spannvorrichtungen zur Vorspannung der Backplatte/n mit den über den jeweiligen Spannbereich verbundenen Bereichen der Backplatte/n in Eingriff sind, sodass die jeweiligen Bereiche der Backplatte/n zueinander gespannt oder spannbar sind.

Gegebenenfalls können somit mehrere Spannbereiche und mehrere Spannvorrichtungen an der Rückseite, insbesondere der mindestens einen Rückenfläche, einer Backplatte angeordnet sein. Dadurch kann die Vorspannung in verschiedenen Bereichen der Backplatte unterschiedlich einstellbar sein.

Gegebenenfalls ist vorgesehen, dass eine Verbindungsvorrichtung als Scharnier ausgebildet ist.

Gegebenenfalls ist vorgesehen, dass eine Verbindungsvorrichtung als Verriegelungsvorrichtung ausgebildet ist.

Gegebenenfalls ist vorgesehen, dass die Backplattenvorrichtung als Backzange ausgebildet ist.

Insbesondere ist vorgesehen, dass die Verbindungsvorrichtungen mit den Backplatten, bevorzugt mit den Schmalseiten der Backplatten, verbunden, insbesondere verschraubt sind.

Gegebenenfalls ist vorgesehen, dass zur Bildung der Überdruckbackform mindestens eine Abschlussleiste, wie insbesondere mindestens eine Dichtleiste und/oder mindestens eine Dampfleiste, vorgesehen ist.

Insbesondere weist die Backplattenvorrichtung, insbesondere die Backplatte, zur Bildung der Überdruckbackform mindestens eine Abschlussleiste, wie insbesondere mindestens eine Dichtleiste und/oder mindestens eine Dampfleiste, auf.

Gegebenenfalls ist vorgesehen, dass die Backmasse im unausgebackenen, insbesondere ungebackenen und/oder nicht gebackenen, Zustand 45% bis einschließlich 70%, insbesondere 45%, 46%, 47%, 48%, 49%, 50%, 51%, 52%, 53%, 54% oder 55%, Wasser enthält.

Insbesondere betrifft die Erfindung auch eine Backplattenvorrichtung, insbesondere Backzange, zur Herstellung unter Überdruck gebackener Formkörper, bevorzugt knusprig spröder Waffeln, aus einer Backmasse.

Gegebenenfalls umfasst die Backplattenvorrichtung zwei Backplatten und, insbesondere beidseitig, an den Backplatten angeordnete Verbindungsvorrichtungen, wobei die Verbindungsvorrichtungen derart ausgestaltet sind, dass die Backplattenvorrichtung öffenbar, schließbar und in der geschlossenen Stellung zur Bildung einer Überdruckbackform verriegelbar ausgebildet ist.

Gegebenenfalls ist vorgesehen, dass die Backplatten an einer Seite eine der Überdruckbackform zugewandte Backfläche und auf der dieser Seite gegenüberliegenden Seite, insbesondere der Rückseite der Backplatte, mindestens eine Rückenfläche aufweisen.

Gegebenenfalls ist vorgesehen, dass die Backplattenvorrichtung, insbesondere die Backplatten, derart ausgestaltet ist, dass sie durch eine über einen Induktorspalt wirkende Induktionsheizvorrichtung aufheizbar ist.

Gegebenenfalls ist vorgesehen, dass die mindestens eine Rückenfläche der Backplattenvorrichtung, insbesondere die mindestens eine Rückenfläche der Backplatte, als eine Seite des Induktorspaltes ausgebildet ist.

Gegebenenfalls ist vorgesehen, dass die mindestens eine Rückenfläche, insbesondere die Rückseite, der Backplatten einer Ebene folgt und ebenenförmig, plan und/oder glatt ausgebildet ist.

Gegebenenfalls ist vorgesehen, dass der Normalabstand zwischen der Backfläche und der mindestens einen Rückenfläche, insbesondere der Rückseite, im Bereich von 7 cm bis einschließlich 12 cm liegt

Gegebenenfalls kann diese Backplattenvorrichtung die oben stehende oder eine weitere Aufgabe lösen.

Gegebenenfalls ist vorgesehen, dass die Backplatten zur Vorspannung der jeweiligen Backplatte gegen den beim Backen der Backmasse in der Überdruckbackform entstehenden Druck ausgebildet und/oder eingerichtet sind.

Gegebenenfalls kann vorgesehen sein, dass die Rückseite und/oder die mindestens eine Rückenfläche, der Backplatte ebenenförmig, plan und/oder glatt ausgestaltet ist. Mit anderen Worten können die Rückseiten und/oder die Rückenflächen frei von Spannbereichen und Spannvorrichtungsbereichen sein.

Der Normalabstand zwischen der Backfläche und der mindestens einen Rückenfläche, insbesondere der Rückseite, kann im Bereich von 7 cm bis einschließlich 12 cm liegen.

Insbesondere betrifft die Erfindung eine Backplattenvorrichtung, insbesondere Backzange, zur Herstellung unter Überdruck gebackener Formkörper, bevorzugt knusprig spröder Waffeln, aus einer Backmasse.

Gegebenenfalls ist vorgesehen, dass die Backplattenvorrichtung zwei Backplatten und, insbesondere beidseitig, an den Backplatten angeordnete Verbindungsvorrichtungen umfasst, wobei die Verbindungsvorrichtungen derart ausgestaltet sind, dass die Backplattenvorrichtung öffenbar, schließbar und in der geschlossenen Stellung zur Bildung einer Überdruckbackform verriegelbar ausgebildet ist.

Gegebenenfalls ist vorgesehen, dass die Backplatten an einer Seite eine der Überdruckbackform zugewandte Backfläche und auf der dieser Seite gegenüberliegenden Seite, insbesondere der Rückseite der Backplatte, mindestens eine Rückenfläche aufweisen.

Gegebenenfalls ist vorgesehen, dass die Backplattenvorrichtung, insbesondere die Backplatten, derart ausgestaltet ist, dass sie durch eine über einen Induktorspalt wirkende Induktionsheizvorrichtung aufheizbar ist.

Gegebenenfalls ist vorgesehen, dass die mindestens eine Rückenfläche der Backplattenvorrichtung, insbesondere die mindestens eine Rückenfläche der Backplatte, als eine Seite des Induktorspaltes ausgebildet ist.

Gegebenenfalls ist vorgesehen, dass die mindestens eine Rückenfläche der Backplatte, bevorzugt die Rückseite, insbesondere im Wesentlichen, ebenenförmig, plan und/oder glatt ausgestaltet ist und mindestens zwei, insbesondere als Ausnehmung ausgestaltete, Spannvorrichtungsbereiche aufweist.

Gegebenenfalls ist vorgesehen, dass an der Backplatte, insbesondere an der Längsseite der Backplatte, mindestens eine, insbesondere klammerförmige oder hakenförmige, Spannvorrichtung zur Vorspannung der jeweiligen Backplatte gegen den beim Backen der Backmasse in der Überdruckbackform entstehenden Druck vorgesehen ist.

Gegebenenfalls ist vorgesehen, dass die mindestens eine Spannvorrichtung jeweils mit den beiden Backplatten, insbesondere mit den Spannvorrichtungsbereichen, in Eingriff ist, wodurch die Backplatten gegebenenfalls zueinander spannbar sind Gegebenenfalls kann diese Backplattenvorrichtung die oben stehende oder eine weitere Aufgabe lösen.

Gegebenenfalls kann vorgesehen sein, dass die Rückseite und/oder die mindestens eine Rückenfläche der Backplatte, insbesondere im Wesentlichen, ebenenförmig, plan und/oder glatt ausgestaltet ist und/oder lediglich zwei als Ausnehmung ausgestaltete Spannvorrichtungsbereiche aufweist.

Gegebenenfalls kann vorgesehen sein, dass an der Längsseite der Backplatte jeweils eine Spannvorrichtung vorgesehen ist, welche als Klammer oder als Haken ausgestaltet ist.

Gemäß einer Ausführungsform die nicht Teil der Erfindung ist, kann vorgesehen sein, dass die Spannvorrichtungen die Backplatte überragen.

Gemäß einer Ausführungsform die nicht Teil der Erfindung ist, kann vorgesehen sein, dass die Spannvorrichtungen außerhalb der Backplatte angeordnet sind.

Gegebenenfalls kann vorgesehen sein, dass die Spannvorrichtungen mittig an, insbesondere an der Längsseite, der Backplatte angeordnet sind.

Gegebenenfalls kann vorgesehen sein, dass die Spannvorrichtung jeweils mit den beiden Backplatten der Backplattenvorrichtung in Eingriff ist, wodurch diese zueinander spannbar sind.

Gegebenenfalls kann vorgesehen sein, dass die Spannvorrichtung jeweils eine Spannvorrichtungseinstellvorrichtung umfasst, durch welche die Spannung der beiden Backplatten zueinander und somit gegebenenfalls die Vorspannung der Backplatte einstellbar ist.

Die Erfindung betrifft eine Backvorrichtung, insbesondere einen Backofen, zur Herstellung unter Überdruck gebackener Formkörper, bevorzugt knusprig spröder Waffeln, aus einer Backmasse, umfassend einen Endlosförderer und mehrere entlang des Endlosförderers vorgesehene Backplattenvorrichtungen, die aneinandergereiht jeweils nacheinander:
- einen Backmassenauftragsbereich zum Auftrag einer Backmasse auf eine geöffnete Backplattenvorrichtung, insbesondere auf deren Backplatten und gegebenenfalls Backflächen, bevorzugt auf die durch die Backplatten gebildete Überdruckbackform,
- einen Schließbereich zum Schließen der Backplattenvorrichtungen,
- einen Backraum zum Backen der in den geschlossenen Backplattenvorrichtungen, insbesondere in der Überdruckbackform, befindlichen Backmassen, wobei in dem Backraum eine Heizvorrichtung zur Beheizung der im Backraum befindlichen Backplattenvorrichtungen, insbesondere der Backplatten, vorgesehen ist,
- einen Öffenbereich zum Öffnen der Backplattenvorrichtungen
- und einen Waffelentnahmebereich zur Entnahme der gebackenen Formkörper aus den geöffneten Backplattenvorrichtungen
   durchlaufen.

Erfindungsgemäß ist vorgesehen, dass im Backraum eine Heizvorrichtung zur Beheizung der im Backraum befindlichen Backplattenvorrichtungen, bevorzugt der im Backraum befindlichen Backplatten, vorgesehen ist.

Bevorzugt ist vorgesehen, dass durch das Backen der Backmasse in der Backplattenvorrichtung, insbesondere in der Überdruckbackform, die gebackenen Formkörper, insbesondere die gebackenen Waffeln, erzeugbar sind.

Gegebenenfalls ist vorgesehen, dass die Heizvorrichtung als mindestens eine Induktionsheizvorrichtung ausgebildet ist.

Erfindungsgemäß ist vorgesehen, dass die Heizvorrichtung mindestens eine Induktionsheizvorrichtung umfasst.

Gegebenenfalls ist vorgesehen, dass die mindestens eine Induktionsheizvorrichtung zur induktiven, insbesondere berührungslosen, Beheizung der Backplattenvorrichtungen, insbesondere der Backplatten, ausgebildet ist.

Erfindungsgemäß ist vorgesehen, dass die mindestens eine Induktionsheizvorrichtung die Backplatte, insbesondere die mindestens eine Rückenfläche der Backplatte, über den Induktorspalt aufheizt.

Bevorzugt ist vorgesehen, dass die Backplattenvorrichtungen kontinuierlich und/oder mit konstanter Geschwindigkeit entlang des Endlosförderers bewegt werden. Gegebenenfalls werden die Backplattenvorrichtungen kontinuierlich und/oder mit konstanter Geschwindigkeit durch verschiedene Bereiche, insbesondere durch den Backmassenauftragsbereich, den Schließbereich, den Backraum, den Öffenbereich und/oder den Waffelentnahmebereich bewegt.

Bevorzugt ist vorgesehen, dass die Heizvorrichtung, insbesondere die mindestens eine Induktionsheizvorrichtung, unbewegt bzw. ortsfest, insbesondere in oder an der Backvorrichtung, angeordnet ist. Die Heizvorrichtung, insbesondere die mindestens eine Induktionsheizvorrichtung, kann beispielsweise am Maschinengestell und/oder am Gehäuse der Backvorrichtung angebracht sein.

Insbesondere bewegen sich die Backplattenvorrichtungen, insbesondere die Backplatten, an der Heizvorrichtung, insbesondere an der mindestens einen Induktionsheizvorrichtung, vorbei.

Gegebenenfalls ist die Heizvorrichtung, insbesondere die mindestens eine Induktionsheizvorrichtung, in ihrer Lage einstellbar in der Backvorrichtung angebracht, sodass beispielsweise bei der mindestens einen Induktionsheizvorrichtung der Induktorspalt einstellbar ist.

Während des Normalbetriebs, also beispielsweise im Backbetrieb, und/oder während der Aufheiz- und Abkühlphase, kann die Heizvorrichtung, insbesondere die mindestens eine Induktionsheizvorrichtung, starr angeordnet sein.

Die Steuerung und/oder Regelung der Heizleistung kann bevorzugt durch die Zufuhr von mehr oder weniger, insbesondere elektrischer, Energie zu den Heizvorrichtungen, insbesondere zu der mindestens einen Induktionsheizvorrichtung, erfolgen.

Die Heizvorrichtung kann eine, zwei, drei, vier, fünf, sechs, sieben, acht, neun, zehn, elf, zwölf, dreizehn, vierzehn, fünfzehn oder mehr Induktionsheizvorrichtungen umfassen oder aus einer, zwei, drei, vier, fünf, sechs, sieben, acht, neun, zehn, elf, zwölf, dreizehn, vierzehn, fünfzehn oder mehr Induktionsheizvorrichtungen gebildet sein.

Die Induktionsheizvorrichtungen können an unterschiedlichen Stellen im Backraum angeordnet sein, sodass insbesondere eine gezielte Beheizung der Backplattenvorrichtungen, insbesondere der Backplatten, erzielbar ist.

Gegebenenfalls ist vorgesehen, dass der Induktorspalt, bevorzugt die Längsseite des Induktorspaltes, von der Heizvorrichtung, insbesondere der mindestens einen Induktionsheizvorrichtung, und der mindestens einen Rückenfläche der Backplatte gebildet und/oder begrenzt ist.

Gegebenenfalls ist vorgesehen, dass der Induktorspalt von der Fläche der Heizvorrichtung, insbesondere der Fläche der mindestens einen Induktionsheizvorrichtung, welche der mindestens einen Rückenfläche der Backplatte zugewandt ist, und der mindestens einen Rückenfläche der Backplatte gebildet und/oder begrenzt ist.

Gegebenenfalls ist vorgesehen, dass der Induktorspalt zwischen der Heizvorrichtung, insbesondere der mindestens einen Induktionsheizvorrichtung, und der mindestens einen Rückenfläche der Backplatte angeordnet ist.

Gegebenenfalls ist vorgesehen, dass der Induktorspalt zwischen der Fläche der Heizvorrichtung, insbesondere der mindestens einen Induktionsheizvorrichtung, welche der mindestens einen Rückenfläche der Backplatte zugewandt ist, und der mindestens einen Rückenfläche der Backplatte angeordnet ist.

Im Rahmen der Erfindung kann unter Induktorspalt der Bereich, insbesondere der Spalt, zwischen der Heizvorrichtung und der von der Heizvorrichtung beheizten Backplattenvorrichtung, insbesondere der von der Heizvorrichtung beheizten Backplatte, bevorzugt der von der Heizvorrichtung beheizten mindestens einen Rückenfläche, verstanden werden.

Gegebenenfalls ist vorgesehen, dass die Backplattenvorrichtungen, insbesondere Backzange, zur Herstellung unter Überdruck gebackener Formkörper, bevorzugt knusprig spröder Waffeln, aus einer Backmasse, eingerichtet sind.

Erfindungsgemäß ist vorgesehen, dass die Backplattenvorrichtungen zwei Backplatten, und, insbesondere beidseitig, an den Backplatten angeordnete Verbindungsvorrichtungen umfassen, wobei die Verbindungsvorrichtungen derart ausgestaltet sind, dass die Backplattenvorrichtungen öffenbar, schließbar und in der geschlossenen Stellung zur Bildung einer Überdruckbackform verriegelbar ausgebildet sind.

Erfindungsgemäß ist vorgesehen, dass die Backplatten an einer Seite eine der Überdruckbackform zugewandte Backfläche und auf der dieser Seite gegenüberliegenden Seite, insbesondere der Rückseite der Backplatte, mindestens eine Rückenfläche aufweisen.

Erfindungsgemäß ist vorgesehen, dass die Backplattenvorrichtungen, insbesondere die Backplatten, derart ausgestaltet sind, dass sie durch eine über einen Induktorspalt wirkende Induktionsheizvorrichtung aufheizbar sind.

Erfindungsgemäß ist vorgesehen, dass die mindestens eine Rückenfläche der Backplattenvorrichtungen, insbesondere die mindestens eine Rückenfläche der Backplatte, als eine Seite des Induktorspaltes ausgebildet ist.

Erfindungsgemäß ist vorgesehen, dass die mindestens eine Rückenfläche der Backplatten einer Ebene folgt und, insbesondere ebenenförmig, plan und/oder glatt, ausgebildet ist.

Gegebenenfalls ist vorgesehen, dass an der Backvorrichtung mindestens eine Druckaufnahmevorrichtung vorgesehen ist.

Gegebenenfalls ist vorgesehen, dass die mindestens eine Druckaufnahmevorrichtung zur Vorspannung der jeweiligen Backplatte gegen den beim Backen der Backmasse in der Überdruckbackform entstehenden Druck ausgebildet und/oder eingerichtet ist.

Gegebenenfalls ist vorgesehen, dass die mindestens eine Druckaufnahmevorrichtung dazu ausgebildet ist, den beim Backen in der Überdruckbackform entstehenden Druck aufzunehmen.

Gegebenenfalls kann diese Backvorrichtung die oben stehende oder eine weitere Aufgabe lösen.

Gegebenenfalls ist vorgesehen, dass die Rückseite und/oder die mindestens eine Rückenfläche der Backplatte ebenenförmig, plan und/oder glatt ausgestaltet ist oder sind. Mit anderen Worten kann die Rückseite und/oder die mindestens eine Rückenfläche frei von Spannbereichen und Spannvorrichtungsbereichen sein.

Gegebenenfalls ist vorgesehen, dass der Normalabstand zwischen der Backfläche und der mindestens einen Rückenfläche, insbesondere der Rückseite, im Bereich von 2 cm bis einschließlich 5 cm liegt.

Insbesondere kann eine Backvorrichtung eine gemäß dieser Ausführungsform ausgestaltete Backplattenvorrichtung umfassen, welche zur Herstellung unter Überdruck gebackener Formkörper, bevorzugt knusprig spröder Waffeln, aus einer Backmasse eingerichtet ist. Gegebenenfalls kann diese Backvorrichtung den Endlosförderer, die Heizvorrichtung und/oder die verschiedenen Bereiche umfassen, welche nacheinander durchlaufen werden und/oder in der Beschreibung beschrieben sind.

Der beim Backen in der Überdruckbackform entstehende Druck kann von mindestens einer an der Backvorrichtung angeordneten Druckaufnahmevorrichtung aufgenommen werden.

Die mindestens eine Druckaufnahmevorrichtung kann derart an der Backvorrichtung angeordnet sein, dass von der mindestens einen Druckaufnahmevorrichtung der beim Backen der Backmasse in der Überdruckform entstehende Druck aufnehmbar ist.

Die Druckaufnahmevorrichtung kann derart an der Backvorrichtung angeordnet sein, dass diese mittig eine Kraft, insbesondere einen Druck, auf die

Backplattenvorrichtungen, insbesondere die Backplatten, ausübt, wodurch die Backplatten gegebenenfalls vorspannbar sind.

Die mindestens eine Druckaufnahmevorrichtung kann zur Aufnahme des entstehenden Druckes und/oder zur Vorspannung der Backplatten mindestens eine Rolle und/oder eine Feder aufweisen.

Gegebenenfalls ist die mindestens eine Druckaufnahmevorrichtung derart an der Backvorrichtung angeordnet, dass deren Rollen zumindest während des Backprozesses der Backmasse an der Rückseite und/oder der mindestens einen Rückenfläche der Backplatten abrollen. Dadurch kann gegebenenfalls über die mindestens eine Druckaufnahmevorrichtung der entstehende Druck aufnehmbar und/oder eine Vorspannung in der Backplatte einstellbar sein.

Über die Feder ist gegebenenfalls die Kraft, welche von der Druckaufnahmevorrichtung auf die Backplatte übertragbar ist, und insbesondere die Vorspannung der Backplatte einstellbar.

Die Backvorrichtung kann Heizvorrichtungen, insbesondere Induktionsheizvorrichtungen, umfassen, welche beidseitig neben der mindestens einen Druckaufnahmevorrichtung angeordnet sind.

Bevorzugt ist vorgesehen, dass die Backplatte an einer Seite eine Backfläche und auf der dieser Seite gegenüberliegenden Seite, insbesondere der Rückseite der Backplatte, mindestens eine Rückenfläche aufweist.

Bevorzugt ist vorgesehen, dass die Backplatte, insbesondere die mindestens eine Rückenfläche der Backplatte, derart ausgestaltet ist, dass sie durch eine über einen Induktorspalt wirkende Induktionsheizvorrichtung aufheizbar ist.

Bevorzugt ist vorgesehen, dass die mindestens eine Rückenfläche als eine Seite des Induktorspaltes ausgebildet ist.

Bevorzugt ist vorgesehen, dass die mindestens eine Rückenfläche der Backplatte einer Ebene folgt und insbesondere ebenenförmig ausgebildet ist.

Bevorzugt ist vorgesehen, dass die Backplatte jeweils mindestens eine Spannvorrichtung zur Vorspannung der Backplatte gegen den beim Backen der Backmasse in der Überdruckbackform entstehenden Druck aufweist.

Bevorzugt ist vorgesehen, dass die mindestens eine Spannvorrichtung zwischen der Rückenfläche und der Backfläche, insbesondere innerhalb, der Backplatte, angeordnet ist.

Gemäß einer weiteren bevorzugten Ausführungsform kann vorgesehen sein, dass an der Rückseite, insbesondere ausschließlich, jeweils zwei Spannbereiche und zwei Rückenflächen vorgesehen sind und/oder dass die Rückenflächen ebenenförmig, plan und/oder glatt ausgebildet sind.

Der Spannbereich kann jeweils als Nut ausgestaltet sein, welche einen Winkel im Bereich von 30° bis einschließlich 60°mit der Rückseite und/oder der jeweiligen Rückenfläche einschließt. Die Spannbereiche können miteinander einen Winkel von 60° bis einschließlich 120° einschließen. Ferner können die Spannbereiche gegengleich und/oder gespiegelt zueinander, insbesondere schräg, an der Backplatte angeordnet sein.

Der mindestens eine Spannvorrichtungsbereich kann als Loch ausgestaltet sein.

Die beiden Spannbereiche können von jeweils mindestens einer Spannvorrichtung, insbesondere von einem Spannmittel, bevorzugt von der in dem jeweiligen Loch angeordneten einen Schraube, durchdrungen und/oder überragt sein. Die mindestens eine Spannvorrichtung kann somit die an den jeweiligen Spannbereich angrenzenden Bereiche der Backplatte verbinden, wodurch diese zueinander spannbar sind.

Durch das Festziehen der Spannvorrichtung, insbesondere des Spannmittels, kann die Vorspannung der Backplatte und/oder die Vorspannung der unterschiedlichen Spannbereiche, insbesondere der unterschiedlichen Backplattenbereiche, einstellbar sein.

Gemäß einer weiteren bevorzugten Ausführungsform kann vorgesehen sein, dass an der Rückseite, insbesondere ausschließlich, jeweils zwei Rückenflächen und jeweils ein Spannbereich vorgesehen sind und/oder dass die Rückenflächen ebenenförmig, plan und/oder glatt ausgebildet sind. Der Spannvorrichtungsbereich kann als Nut ausgestaltet sein, welche einen Winkel im Bereich von 30° bis einschließlich 60°mit der Rückseite und/oder der Rückenfläche einschließt.

Der Spannbereich kann von jeweils mindestens einer Spannvorrichtung, insbesondere von einem Spannmittel, bevorzugt von einer Schraube, durchdrungen und/oder überragt sein. Die mindestens eine Spannvorrichtung kann somit die an den jeweiligen Spannbereich angrenzenden Bereiche der Backplatte verbinden, wodurch diese zueinander spannbar sind. Der mindestens eine Spannvorrichtungsbereich kann als Loch ausgestaltet sein.

Insbesondere kann die mindestens eine Spannvorrichtung als Spannmittel mindestens eine Schraube und als Distanzmittel mindestens jeweils eine Stellschraube umfassen.

Das Spannmittel und das Distanzmittel können in dem jeweiligen Spannvorrichtungsbereich angeordnet sein.

Die Schraube und die Stellschraube können mit der Backplatte verschraubt sein, wobei die Schraube insbesondere einerseits mit der Backplatte selbst und über die Stellschraube mit der Backplatte verbunden ist.

Durch das Festziehen der Schraube kann die Vorspannung der Backplatte einstellbar sein. Die maximale Vorspannung der Backplatte kann durch die Stellschraube vorgegeben und begrenzt sein, da die maximale Einschraubtiefe der Schraube durch die Stellschraube begrenzt ist.

Gemäß einer weiteren bevorzugten Ausführungsform kann vorgesehen sein, dass an der Rückseite, insbesondere ausschließlich, jeweils ein Spannbereich, zwei Spannvorrichtungsbereiche und zwei Rückenflächen vorgesehen sind und/oder dass die Rückenflächen ebenenförmig, plan und/oder glatt ausgebildet sind. Der Spannbereich und die zwei Spannvorrichtungsbereiche können als Nut ausgebildet sein.

Insbesondere können die zwei als Nut ausgestalteten Spannvorrichtungsbereiche im Wesentlichen normal auf die Rückseite und/oder die Rückenfläche stehend an der Backplatte und beabstandet von dem Spannbereich vorgesehen sein.

Der Spannbereich kann von jeweils mindestens einer Spannvorrichtung, insbesondere von einem Spannmittel, bevorzugt von einer Schraube, durchdrungen und/oder überragt sein. Die mindestens eine Spannvorrichtung kann somit die an den jeweiligen Spannbereich angrenzenden Bereiche der Backplatte verbinden, wodurch diese zueinander spannbar sind.

Insbesondere kann vorgesehen sein, dass ein Teil des Spannmittels, insbesondere der Kopf der Schraube und/oder der Klemmschraube, in dem einem Spannvorrichtungsbereich und ein weiterer Teil des Spannmittels, insbesondere die Mutter der Schraube und/oder der Klemmschraube, in dem anderen Spannvorrichtungsbereich angeordnet sind.

Durch das Festziehen der Schraube und Mutter kann die Vorspannung der Backplatte einstellbar sein. Die maximale Vorspannung der Backplatte kann durch ein Distanzmittel vorgegeben und begrenzt sein.

Gemäß einer weiteren bevorzugten Ausführungsform kann vorgesehen sein, dass an der Rückseite, insbesondere ausschließlich, jeweils ein als Nut ausgestalteter Spannbereich, ein als Ausnehmung ausgebildeter Spannvorrichtungsbereich und zwei Rückenflächen vorgesehen sind und/oder dass die Rückenflächen ebenenförmig, plan und/oder glatt ausgebildet sind. Der Spannbereich kann im Wesentlichen normal auf die Rückseite und/oder die Rückenflächen angeordnet sein.

In dem Spannvorrichtungsbereich kann ein U-förmig ausgestalteter Spannteil angeordnet sein, welcher mittels Schrauben mit jeweils einem Bereich der Backplatte verschraubt ist. Der Spannvorrichtungsbereich kann zwei Erhebungen aufweisen, welche zum formschlüssigen Eingriff mit dem U-förmigen Spannteil ausgebildet ist. Der Spannteil ist gegebenenfalls mit Erhebungen des Spannvorrichtungsbereichs in Eingriff.

Durch das Festziehen der Schrauben ist gegebenenfalls die Vorspannung der Backplatten einstellbar ist.

Gemäß einer weiteren bevorzugten Ausführungsform kann vorgesehen sein, dass an der Rückseite, insbesondere ausschließlich, ein nutförmiger Spannbereich, zwei Spannvorrichtungsbereiche und zwei Rückenflächen vorgesehen sind und/oder dass die Rückenflächen ebenenförmig, plan und/oder glatt ausgebildet sind.

Die mindestens eine Spannvorrichtung kann zwei L-förmig ausgestaltete Spannteile umfassen, welche jeweils mit einer Schraube mit der Backplatte verschraubt sind. Die beiden L-förmigen Spannteile können über eine sogenannte Klemmschraube miteinander verbunden sein.

Die Spannvorrichtungsbereiche können als Ausnehmung ausgestaltet sein. Die Spannvorrichtungsbereiche können jeweils eine Erhebung aufweisen, welche zum formschlüssigen Eingriff mit dem jeweiligen L-förmigen Spannteil ausgebildet ist.

Die Klemmschraube kann somit die an den jeweiligen Spannbereich angrenzenden Bereiche der Backplatte, insbesondere die Erhebungen, verbinden, wodurch diese zueinander spannbar sind.

Ein Teil der Klemmschraube, insbesondere der Kopf der Klemmschraube, kann in einem Spannvorrichtungsbereich und ein weiterer Teil der Klemmschraube, insbesondere die Mutter der Schraube, kann in dem anderen Spannvorrichtungsbereich angeordnet sein.

Durch das Festziehen der Schraube und Mutter kann die Vorspannung der Backplatte einstellbar sein. Die maximale Vorspannung der Backplatte kann durch ein in dem Spannbereich angeordnetes Distanzmittel vorgegeben und begrenzt sein.

Mit anderen Worten kann durch das Festziehen der Klemmschraube die Vorspannung der Backplatte einstellbar sein.

Gemäß einer weiteren bevorzugten Ausführungsform kann vorgesehen sein, dass an der Rückseite, insbesondere ausschließlich, ein nutförmiger Spannbereich, zwei Spannvorrichtungsbereiche und zwei Rückenflächen vorgesehen sind und/oder dass die Rückenflächen ebenenförmig, plan und/oder glatt ausgebildet sind. Die mindestens eine Spannvorrichtung kann zwei Spannteile umfassen. Die beiden Spannteile können über eine sogenannte Klemmschraube miteinander verbunden sein.

Die Spannvorrichtungsbereiche können als L-förmige Ausnehmung ausgestaltet sein, welche gegebenenfalls jeweils eine L-förmige Erhebung aufweisen. Die Spannteile können zum formschlüssigen Eingriff mit den L-förmigen Ausnehmungen, insbesondere den L-förmigen Erhebungen, ausgebildet sein.

Die Klemmschraube kann somit die an den jeweiligen Spannbereich angrenzenden Bereiche der Backplatte verbinden, wodurch diese zueinander spannbar sind.

Ein Teil der Klemmschraube, insbesondere der Kopf der Klemmschraube, kann in einem Spannvorrichtungsbereich und ein weiterer Teil der Klemmschraube, insbesondere die Mutter der Schraube, kann in dem anderen Spannvorrichtungsbereich angeordnet sein.

Durch das Festziehen der Schraube und Mutter kann somit die Vorspannung der Backplatte einstellbar sein. Die maximale Vorspannung der Backplatte kann durch ein in dem Spannbereich angeordnetes Distanzmittel vorgegeben und begrenzt sein.

Gemäß einer Ausführungsform einer Backplattenvorrichtung kann vorgesehen sein, dass die Rückseite, insbesondere ausschließlich, einen Spannvorrichtungsbereich und zwei Rückenflächen aufweist und/oder dass die Rückenflächen ebenenförmig, plan und/oder glatt ausgestaltet sind.

Gegebenenfalls ist vorgesehen, dass, insbesondere ausschließlich, eine Ausnehmung in der Rückseite der Backplatte vorgesehen ist. Insbesondere kann diese Ausnehmung im vorgespannten Zustand der Backplatte in die Backplatte gefräst sein. Insbesondere kann der Spannvorrichtungsbereich als, insbesondere trapezförmige, Ausnehmung ausgestaltet sein.

In den Spannvorrichtungsbereich kann zur Einstellung der Vorspannung der Backplatte eine, bevorzugt trapezförmige, Spannvorrichtung, nämlich insbesondere ein Keil, eingesetzt sein. Dadurch kann die Backplatte auseinander pressbar oder drückbar sein und insbesondere die Vorspannung der Backplatte einstellbar sein.

Insbesondere ist ein Verfahren vorgesehen, in welchem in einem ersten Schritt die Backplatte in einen vorgespannten Zustand gebracht wird. In einem weiteren Schritt kann eine, insbesondere trapezförmige, Ausnehmung in die Backplatte gefräst werden. Nach dem Fräsen kann die Backplatte in einen entspannten Zustand gebracht werden, wodurch sich gegebenenfalls eine vorab definierte Vorspannung einstellt.

Gegebenenfalls ist vorgesehen, dass die Vorspannung somit rein über die mechanische Bearbeitung der Backplatte erfolgt. Mit anderen Worten kann die Vorspannung durch die mechanische Bearbeitung im vorgespannten Zustand einstellbar sein.

Insbesondere kann aber auch vorgesehen sein, dass gemäß dem Verfahren in die Ausnehmung eine Spannvorrichtung, insbesondere eine trapezförmige Spannvorrichtung, bevorzugt ein Keil, eingesetzt und/oder angeordnet wird. Durch die Einsetzung und/oder Anordnung der Spannvorrichtung in der Ausnehmung kann die Vorspannung der Backplatte eingestellt werden. Gegebenenfalls werden die Backplattenbereiche durch die Spannvorrichtung auseinander gepresst und/oder gedrückt.

Gegebenenfalls ist eine Backplattenvorrichtung, insbesondere Backzange, zur Herstellung unter Überdruck gebackener Formkörper, bevorzugt knusprig spröder Waffeln, aus einer Backmasse vorgesehen.

Gegebenenfalls ist vorgesehen, dass die Backplattenvorrichtung zwei Backplatten, und, insbesondere beidseitig, an den Backplatten angeordnete Verbindungsvorrichtungen umfasst, wobei die Verbindungsvorrichtungen derart ausgestaltet sind, dass die Backplattenvorrichtung öffenbar, schließbar und in der geschlossenen Stellung zur Bildung einer Überdruckbackform verriegelbar ausgebildet ist.

Gegebenenfalls ist vorgesehen, dass die Backplatten an einer Seite eine der Überdruckbackform zugewandte Backfläche und auf der dieser Seite gegenüberliegenden Seite, insbesondere der Rückseite der Backplatte, mindestens eine Rückenfläche aufweisen.

Gegebenenfalls ist vorgesehen, dass die Backplattenvorrichtung, insbesondere die Backplatten, derart ausgestaltet ist, dass sie durch eine über einen Induktorspalt wirkende Induktionsheizvorrichtung aufheizbar ist.

Gegebenenfalls ist vorgesehen, dass die mindestens eine Rückenfläche der Backplattenvorrichtung, insbesondere die mindestens eine Rückenfläche der Backplatte, als eine Seite des Induktorspaltes ausgebildet ist.

Gegebenenfalls ist vorgesehen, dass die Backplatten in einer Trägerkonstruktion angeordnet sind.

Gegebenenfalls ist vorgesehen, dass die Trägerkonstruktion derart ausgestaltet ist, die beim Backen der Backmasse in der Überdruckbackform entstehenden Drücke, insbesondere zum Großteil, aufzunehmen und/oder die Vorspannung der Backplatten einzustellen.

Gegebenenfalls ist vorgesehen, dass die Trägerkonstruktion zur Vorspannung der jeweiligen Backplatte gegen den beim Backen der Backmasse in der Überdruckbackform entstehenden Druck ausgebildet ist.

Gemäß dieser Ausführungsform einer Backplattenvorrichtung kann vorgesehen sein, dass die Backplatten in einer Trägerkonstruktion, insbesondere einem Rahmen, angeordnet sind.

Der Normalabstand zwischen der Backfläche und der mindestens einen Rückenfläche, insbesondere der Rückseite, kann gemäß dieser Ausführungsform im Bereich von 6 cm bis einschließlich 10 cm liegen.

Die Trägerkonstruktion kann derart ausgestaltet sein, die beim Backen der Backmasse entstehenden Drücke, insbesondere zum Großteil, aufzunehmen und/oder die Vorspannung der Backplatten einzustellen.

Um die Vorspannung der Backplatte einzustellen, können zwischen der Trägerkonstruktion und der Backplatte Inserts, insbesondere Bleche, angeordnet sein. Gegebenenfalls kann diese Backplattenvorrichtung die oben stehende oder eine weitere Aufgabe lösen.

Weitere erfindungsgemäße Merkmale ergeben sich gegebenenfalls aus den Ansprüchen, der Beschreibung der Ausführungsbeispiele und den Figuren.

Die Erfindung wird nun am Beispiel exemplarischer, nicht ausschließlicher und/oder nicht einschränkender Ausführungsbeispiele weiter erläutert.

Es sei festgehalten, dass in den unterschiedlichen Figuren und/oder Ausführungsformen gegebenenfalls gleiche Teile mit gleichen Bezugszeichen und/oder gleichen Bezeichnungen versehen werden. Die in der gesamten Beschreibung enthaltenen Offenbarungen können sinngemäß auf gleiche Teile mit gleichen Bezugszeichen und/oder gleichen Bezeichnungen übertragen werden. Auch können die in der Beschreibung gewählten Lageangaben, wie z.B. oben, unten, von rechts, von links, seitlich und dergleichen auf die unmittelbar beschriebene und dargestellte Figur bezogen werden.
Fig. 1a, 1b und 1c zeigen eine schematische grafische Darstellung einer ersten Ausführungsform der erfindungsgemäßen Backplattenvorrichtung,
Fig. 2a, 2b und 2c zeigen eine schematische grafische Darstellung einer zweiten Ausführungsform der erfindungsgemäßen Backplattenvorrichtung,
Fig. 3 zeigt eine schematische grafische Darstellung einer dritten Ausführungsform der erfindungsgemäßen Backplattenvorrichtung,
Fig. 4 zeigt eine schematische grafische Darstellung einer vierten Ausführungsform der erfindungsgemäßen Backplattenvorrichtung,
Fig. 5 zeigt eine schematische grafische Darstellung einer fünften Ausführungsform der erfindungsgemäßen Backplattenvorrichtung,
Fig. 6 zeigt eine schematische grafische Darstellung einer sechsten Ausführungsform der erfindungsgemäßen Backplattenvorrichtung,
Fig. 7 zeigt eine schematische grafische Darstellung einer siebenten Ausführungsform der erfindungsgemäßen Backplattenvorrichtung,
Fig. 8 zeigt eine schematische grafische Darstellung einer achten Ausführungsform der erfindungsgemäßen Backplattenvorrichtung,
Fig. 9 zeigt eine schematische grafische Darstellung einer neunten, nicht zu der Erfindung gehörenden Ausführungsform einer Backplattenvorrichtung,
Fig. 10 zeigt eine schematische grafische Darstellung einer zehnten Ausführungsform der erfindungsgemäßen Backplattenvorrichtung,
Fig. 11 zeigt eine schematische grafische Darstellung einer elften Ausführungsform einer Backplattenvorrichtung,
Fig. 12a und 12b zeigen eine schematische grafische Darstellung einer zwölften Ausführungsform einer Backplattenvorrichtung,
Fig. 13 zeigt eine schematische grafische Darstellung einer Ausführungsform einer Backplattenvorrichtung und
Fig. 14a und 14b zeigen schematische grafische Darstellungen einer Ausführungsform einer erfindungsgemäßen Backvorrichtung.

Wenn nicht anders angegeben, so entsprechen die Bezugszeichen folgenden Komponenten:
Backplattenvorrichtung 1, Backplatte 2, Verbindungsvorrichtung 3, Rückenfläche 4, Induktorspalt 5, Induktionsheizvorrichtung 6, Spannvorrichtung 7, Backfläche 8, Normalabstand 9, Spannbereich 10, Spannmittel 11, Distanzmittel 12, Backvorrichtung 13, Backmassenauftragsbereich 14, Schließbereich 15, Backraum 16, Heizvorrichtung 17, Öffenbereich 18, Waffelentnahmebereich 19, Endlosförderer 20, Schraube 21, Spannteil 22, Hülse 23, Passscheibe 24, Spannvorrichtungsbereich 25, Stellschraube 26 und Druckaufnahmevorrichtung 27, Rollen 28, Trägerkonstruktion 29 und Rückseite 30.

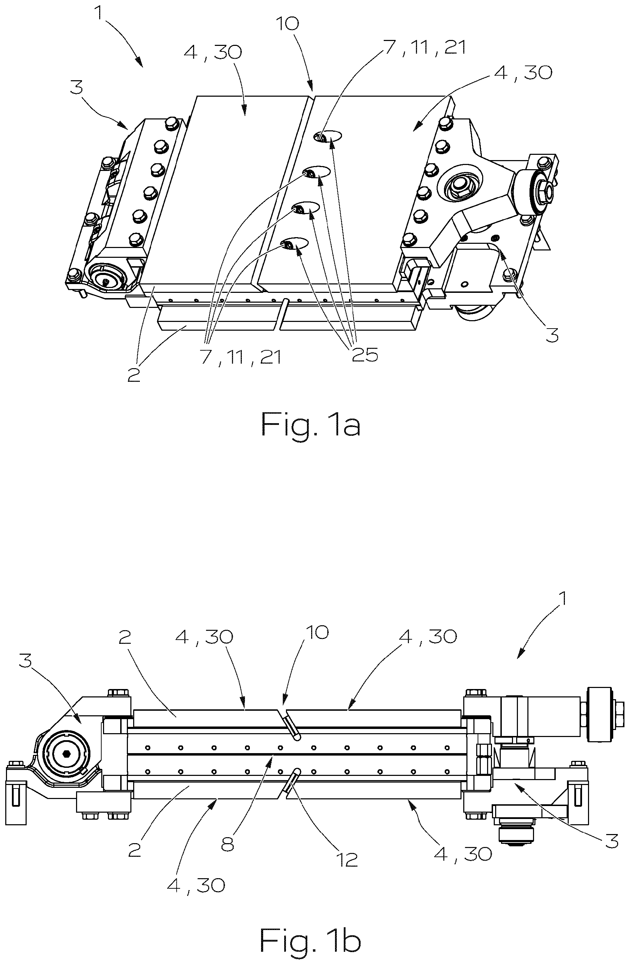

**Figuren 1a bis 1c** zeigen eine schematische grafische Darstellung einer ersten Ausführungsform der erfindungsgemäßen Backplattenvorrichtung 1.

Die Backplattenvorrichtung 1, insbesondere die Backzange, ist zur Herstellung unter Überdruck gebackener Formkörper, bevorzugt knusprig spröder, Waffeln, aus einer Backmasse eingerichtet. Die Backplattenvorrichtung 1 umfasst zwei Backplatten 2.

Die Backmasse enthält im unausgebackenen Zustand 50% Wasser.

An der Schmalseite der Backplatten 2 sind beidseitig Verbindungsvorrichtungen 3 angeordnet. Gemäß dieser Ausführungsform sind die Verbindungsvorrichtungen 3 mit der Backplatte 2 verschraubt. Die Verbindungsvorrichtungen 3 sind dazu eingerichtet, dass die Backplattenvorrichtung 1 öffenbar, schließbar und in der geschlossenen Stellung zur Bildung einer Überdruckbackform verriegelbar ist.

Die eine Verbindungsvorrichtung 3 ist als Scharnier ausgebildet. Die andere Verbindungsvorrichtung 3 ist als Verriegelungsvorrichtung ausgebildet. Gemäß dieser Ausführungsform ist die Backplattenvorrichtung 1 als Backzange ausgebildet.

Die Backplatten 2 der Backplattenvorrichtung 1 weisen an der Seite, welcher der Überdruckbackform zugewandt ist, eine Backfläche 8 und auf der dieser Seite gegenüberliegenden Seite eine Rückseite 30 auf. Die Rückseite 30 der Backplatte 2 umfasst zwei Rückenflächen 4.

Die Backplattenvorrichtung 1, insbesondere die Backplatten 2, bevorzugt deren Rückenflächen 4, sind derart ausgestaltet, dass sie durch eine über einen Induktorspalt 5 wirkende Induktionsheizvorrichtung 6 aufheizbar ist.

Die Rückenflächen 4 sind dabei als eine Seite des Induktorspaltes 5 ausgebildet. Mit anderen Worten sind die Rückenflächen 4 derart ausgestaltet, dass diese mittels einer Induktionsheizvorrichtung 6 beheizbar sind.

Die Backplatten 2 weisen vier Spannvorrichtungen 7 zur Vorspannung der jeweiligen Backplatte 2 gegen den beim Backen der Backmasse in der Überdruckbackform entstehenden Druck auf.

Die vier Spannvorrichtungen 7 sind zwischen der Rückenfläche 4 und der Backfläche 8, insbesondere innerhalb, der Backplatte 2, angeordnet.

Damit die Backplattenvorrichtung 1 effizient mittels einer Induktionsheizvorrichtung 6 aufheizbar ist, folgen die Rückenflächen 4 einer Ebene und sind ebenenförmig ausgebildet. Mit anderen Worten sind die Rückenflächen 4 zu diesem Zweck im Wesentlichen plan, erhebungsfrei, glatt und/oder rippenlos ausgebildet.

Die Rückseite 30 der Backplatte 2 weist gemäß dieser Ausführungsform ausschließlich den Spannbereich 10, vier Spannvorrichtungsbereiche 25 und zwei Rückenflächen 4 auf. Der Spannbereich 10 ist als Nut ausgebildet und mittig an der Rückseite 30 der Backplatte 2 vorgesehen. Die vier Spannvorrichtungsbereiche 25 sind als Ausnehmungen, nämlich als Loch ausgebildet, in welchen die Spannvorrichtungen 7 angeordnet sind.

Die Rückenflächen 4 sind gemäß dieser Ausführungsform eben ausgestaltet und weisen keine Störkonturen auf.

Der Normalabstand 9 zwischen der Backfläche 8 und der Rückenfläche 4 beträgt gemäß dieser Ausführungsform 6,5 Zentimeter.

Die Backplatten 2 sind einstückig ausgebildet.

Die vier Spannvorrichtungen 7 umfassen gemäß dieser Ausführungsform vier Spannmittel 11, welche als Schrauben 21 ausgestaltet sind. Die in dem Loch angeordneten Spannmittel 11 durchdringen den Spannbereich 10 und sind zur Vorspannung der Backplatte 2 eingerichtet.

Die vier Spannvorrichtungen 7, insbesondere die vier Spannmittel 11, sind zur Vorspannung der Backplatte 2 mit Bereichen der Backplatten 2 in Eingriff, welche an den Spannbereich 10 angrenzen. Durch das Festziehen der Spannmittel 11 werden diese Bereiche der Backplatten 2 zueinander gespannt, wodurch die Vorspannung der Backplatte 2 einstellbar ist.

Ferner umfasst die Spannvorrichtung 7 ein Distanzmittel 12, insbesondere eine Distanzscheibe, welche in dem Spannbereich 10, also der Nut, angeordnet ist. Gemäß dieser Ausführungsform werden die Spannmittel 11 soweit festgezogen, bis die Nut mit dem Distanzmittel 12 formschlüssig in Eingriff steht und die Seitenflächen der Nut an dem Distanzmittel 12 anliegen.

Die maximale Vorspannung der Backplatte 2 ist somit durch die Distanzmittel 12 begrenzt.

Mit anderen Worten erfolgt die Vorspannung der Backplatten 2 und/oder die sogenannte Mitteneinstellung der Backplatten 2 mittels der schräg in der Backplatte 2 angeordneten Spannmittel 11.

Zur Einstellung der genauen Vorspannung der Backplatte 2 können unterschiedliche Distanzmittel 12 verwendet werden, welche eine unterschiedliche Stärke aufweisen. Dazu werden die Spannmittel 11 gelockert und die Distanzmittel 12 in dem Spannbereich 10 durch Distanzmittel 12 mit einer anderen Dicke ausgetauscht. Anschließend können die Spannmittel 11 wieder festgezogen werden.

Die durch die vier Spannvorrichtungen 7 vorgespannte Backplatte 2 wirkt somit selbst als Biegeträger zur Aufnahme der beim Backen in der Überdruckbackform ausgehenden Druckkräfte.

Ferner weist die Backplattenvorrichtung 1, insbesondere die Backplatten 2, zur Bildung der Überdruckbackform mindestens eine Abschlussleiste, wie insbesondere mindestens eine Dichtleiste und/oder mindestens eine Dampfleiste, auf.

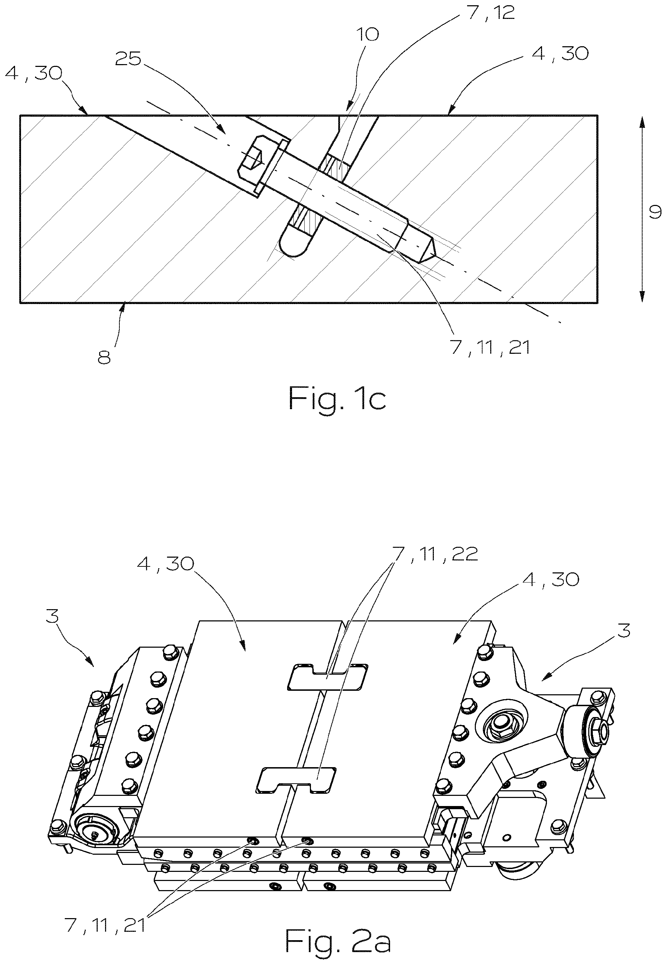

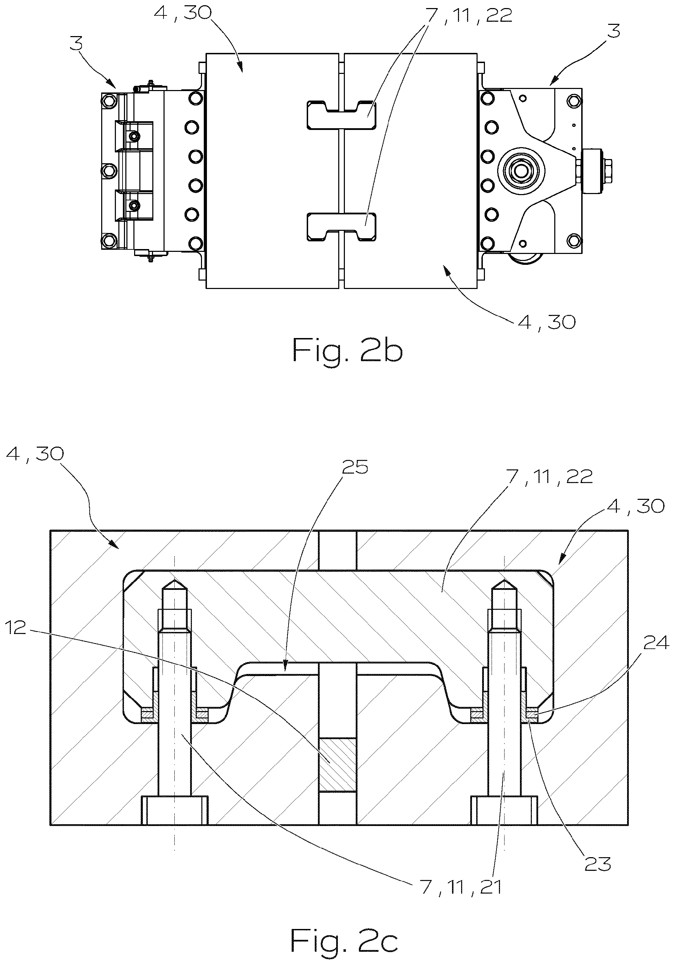

**Figuren 2a bis 2c** zeigen eine schematische grafische Darstellung einer zweiten Ausführungsform der erfindungsgemäßen Backplattenvorrichtung 1. Die Merkmale der Ausführungsform gemäß Fig. 2a, 2b und 2c können bevorzugt den Merkmalen der Ausführungsform gemäß den Figuren 1a, 1b und/oder 1c entsprechen.

Gemäß dieser Ausführungsform sind an der Rückseite 30 der Backplatte 2 jeweils zwei Spannvorrichtungen 7 und zwei, insbesondere ebenenförmige, plane und/oder glatte, Rückenflächen 4 angeordnet. Die Spannvorrichtungen 7 umfassen jeweils als Spannmittel 11 zwei Schrauben 21, zwei Hülsen 23, zwei Passscheiben 24, einen U-förmigen Spannteil 22 und ein Distanzmittel 12.

Der U-förmige Spannteil 22 überragt gemäß dieser Ausführungsform den Spannbereich 10 und ist jeweils durch die Schrauben 21 mit den an den Spannbereich 10 angrenzenden Bereichen verbunden.

Die zwei U-förmigen Spannteile 22 sind um 180° verdreht zueinander an der Rückseite 30 angeordnet.

Die Spannvorrichtungsbereiche 25, insbesondere die Ausnehmungen, in welcher die U-förmigen Spannteile 22 angeordnet sind, sind keilförmig und/oder zum Eingriff mit dem Spannteil 22 ausgestaltet.

Ferner sind die U-förmigen Spannteile 22 keilförmig und/oder zum Eingriff mit den jeweiligen Spannvorrichtungsbereichen 25 ausgestaltet.

Durch das Festziehen der Schrauben 21 kann die Backplatte 2 vorgespannt werden. Die maximale Vorspannung wird gemäß dieser Ausführungsform durch die Auswahl der Distanzmittel 12, nämlich der Passscheiben 24 und dem Distanzmittel 12, begrenzt, da dadurch die Verformung des Spannbereichs 10 begrenzt ist.

Die genaue Vorspannung der Backplatte 2 wird gemäß dieser Ausführungsform mittels der Passscheiben 24 eingestellt. Die Schrauben 21 können dazu demontiert werden, wodurch der U-förmige Spannteil 22 mit den Hülsen 23 herausgenommen werden kann. Anschließend können auch die Hülsen 23 abgenommen und die gewünschte Vorspannung mittels Passscheiben 24 eingestellt werden.

Durch das Festziehen der Schrauben 21 wird der keilförmige Teil des Spannteils 22 entlang des keilförmigen Teils des Spannvorrichtungsbereichs 25 bewegt und die Vorspannung der Backplatte 2, insbesondere die Spannung der Bereiche zueinander, eingestellt.

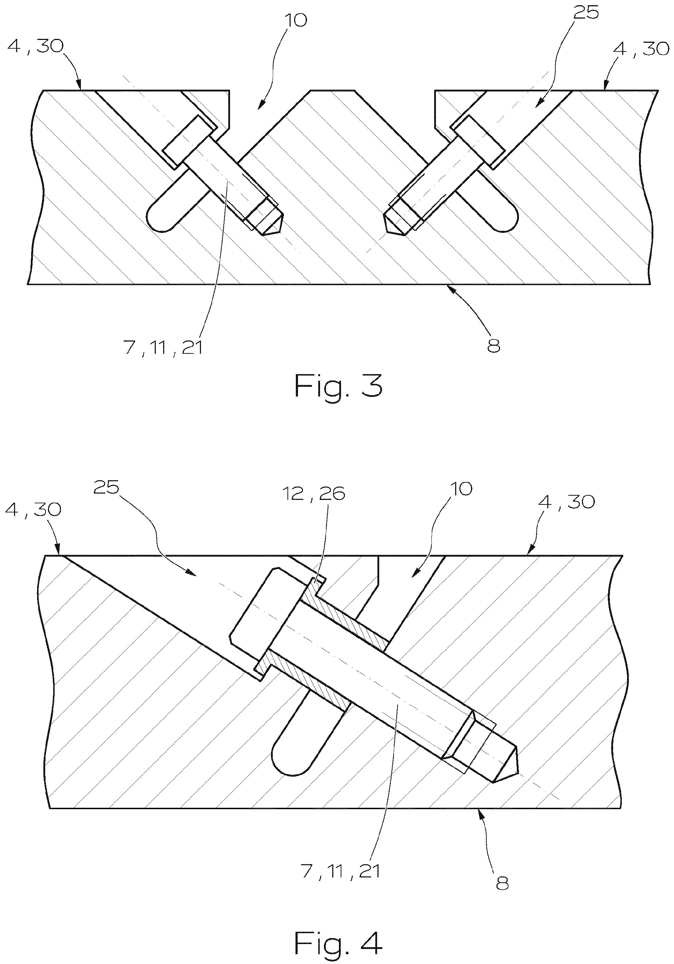

**Figur 3** zeigt eine schematische grafische Darstellung einer dritten Ausführungsform der erfindungsgemäßen Backplattenvorrichtung 1. Die Merkmale der Ausführungsform gemäß Fig. 3 können bevorzugt den Merkmalen der Ausführungsform gemäß den Figuren 1a, 1b, 1c, 2a, 2b und/oder 2c entsprechen.

Gemäß der dritten Ausführungsform sind an der Rückseite 30 der Backplatten 2 zwei Spannbereiche 10 und zwei, insbesondere ebenenförmige, plane und/oder glatte, Rückenflächen 4 vorgesehen. Diese Spannbereiche 10 sind als Nuten ausgebildet und sind gemäß dieser Ausführungsform gegengleich und gespiegelt zueinander an der Rückseite 30 angeordnet. Die Spannvorrichtungsbereiche 25 sind als Löcher ausgestaltet.

Die beiden Spannbereiche 10 werden von jeweils mindestens einen Spannvorrichtung 7 durchdrungen. Die Spannvorrichtung 7 verbindet die an den jeweiligen Spannbereich 10 angrenzenden Bereiche der Backplatte 2, wodurch diese zueinander spannbar sind.

Durch das Festziehen der Spannvorrichtungen 7, nämlich der in dem Loch angeordneten Schraube 21, ist die Vorspannung der Backplatte 2 bzw. der unterschiedlichen Backplattenbereiche einstellbar. Die maximale Vorspannung der Backplatte 2 ist durch die Distanzmittel 12 begrenzt, da die Verformung des jeweiligen Spannbereichs 10 durch das Distanzmittel 12 begrenzt ist.

**Figur 4** zeigt eine schematische grafische Darstellung einer vierten Ausführungsform der erfindungsgemäßen Backplattenvorrichtung 1. Die Merkmale der Ausführungsform gemäß Fig. 4 können bevorzugt den Merkmalen der Ausführungsform gemäß den Figuren 1a, 1b, 1c, 2a, 2b, 2c und/oder 3 entsprechen.

Gemäß der vierten Ausführungsform sind an der Rückseite 30 der Backplatten 2 ein Spannbereich 10 und zwei, insbesondere ebenenförmige, plane und/oder glatte, Rückenflächen 4 vorgesehen. Dieser Spannbereich 10 ist als Nut ausgebildet. Die Spannvorrichtungsbereiche 25 sind als Löcher ausgestaltet.

Der Spannbereich 10 wird von jeweils mindestens einer Spannvorrichtung 7 durchdrungen. Die Spannvorrichtung 7 verbindet die an den jeweiligen Spannbereich 10 angrenzenden Bereiche der Backplatte 2, wodurch diese zueinander spannbar sind.

Gemäß der vierten Ausführungsform umfasst die Spannvorrichtung 7 als Spannmittel 11 mindestens eine Schraube 21 und als Distanzmittel 12 mindestens jeweils eine Stellschraube 26.

Die in dem Loch angeordnete Schraube 21 und die Stellschraube 26 sind mit der Backplatte 2 verschraubt. Die Schraube 21 ist einerseits direkt mit der Backplatte 2 verbunden und andererseits über die Stellschraube 26 mit der Backplatte 2 verschraubt. Mit anderen Worten durchdringt die Schraube 21 gemäß dieser Ausführungsform die Stellschraube 26.

Durch das Festziehen der Schraube 21 ist die Vorspannung der Backplatte 2 einstellbar. Die maximale Vorspannung der Backplatte 2 ist durch die Stellschraube 26 vorgegeben und begrenzt, da die maximale Einschraubtiefe der Schraube 21 durch die Stellschraube 26 begrenzt ist.

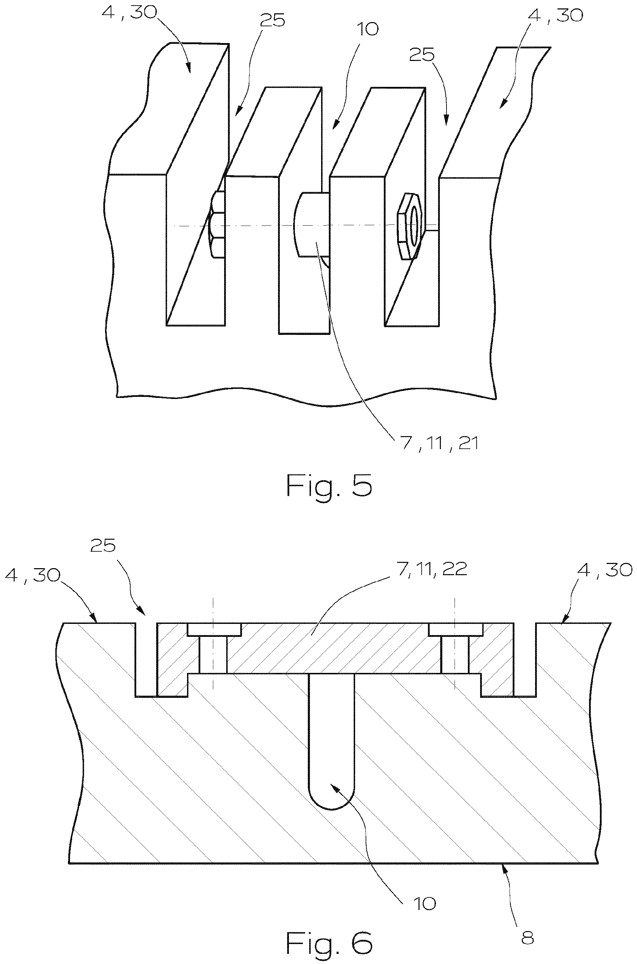

**Figur 5** zeigt eine schematische grafische Darstellung einer fünften Ausführungsform der erfindungsgemäßen Backplattenvorrichtung 1. Die Merkmale der Ausführungsform gemäß Fig. 5 können bevorzugt den Merkmalen der Ausführungsform gemäß den Figuren 1a, 1b, 1c, 2a, 2b, 2c, 3 und/oder 4 entsprechen.

Gemäß der fünften Ausführungsform umfasst die Spannvorrichtung als Spannmittel 11 mindestens eine sogenannte Klemmschraube, welche eine Schraube 21 und eine Mutter umfasst. An der Rückseite 30 der Backplatte 2 sind der Spannbereich 10, die zwei Spannvorrichtungsbereiche 25 und zwei, insbesondere ebenenförmige, plane und/oder glatte, Rückenflächen 4 angeordnet. Der Spannbereich 10 und die zwei Spannvorrichtungsbereiche 25 sind als Nut ausgestaltet und stehen im Wesentlichen normal auf die Rückseite 30, insbesondere die Rückenflächen 4.

Die Klemmschraube ist mit der Backplatte 2 verschraubt. Der Spannbereich 10 ist von der Klemmschraube durchdrungen und/oder überragt.

Die Klemmschraube verbindet somit die an den jeweiligen Spannbereich 10 angrenzenden Bereiche der Backplatte 2, wodurch diese zueinander spannbar sind.

Ein Teil der Klemmschraube, insbesondere der Kopf der Klemmschraube, ist in einem Spannvorrichtungsbereich 25 und ein weiterer Teil der Klemmschraube, insbesondere die Mutter der Schraube 21, ist in dem anderen Spannvorrichtungsbereich 25 angeordnet.

Durch das Festziehen der Klemmschraube ist die Vorspannung der Backplatte 2 einstellbar. Die maximale Vorspannung der Backplatte 2 ist durch ein nicht gezeigtes Distanzmittel 12, insbesondere ein in dem Spannbereich 10 angeordnetes Einlageblech, vorgegeben und begrenzt.

**Figur 6** zeigt eine schematische grafische Darstellung einer sechsten Ausführungsform der erfindungsgemäßen Backplattenvorrichtung 1. Die Merkmale der Ausführungsform gemäß Fig. 6 können bevorzugt den Merkmalen der Ausführungsform gemäß den Figuren 1a, 1b, 1c, 2a, 2b, 2c, 3, 4 und/oder 5 entsprechen.

An der Rückseite 30 der Backplatte 2 sind jeweils ein als Nut ausgestalteter Spannbereich 10 und zwei, insbesondere ebenenförmige, plane und/oder glatte, Rückenflächen 4 vorgesehen. Dieser Spannbereich 10 steht im Wesentlichen normal auf die Rückseite 30, insbesondere die Rückenflächen 4. Ferner ist an der Rückseite 30 ein Spannvorrichtungsbereich 25 vorgesehen, welcher als Ausnehmung ausgestaltet ist.

In dem Spannvorrichtungsbereich 25 ist ein U-förmig ausgestalteter Spannteil 22 angeordnet, welcher mittels Schrauben 21 mit jeweils einem Bereich der Backplatte 2 verschraubt ist. Der Spannvorrichtungsbereich 25 weist zwei Erhebungen auf, welche zum formschlüssigen Eingriff mit dem U-förmigen Spannteil 22 ausgebildet sind. Der Spannteil 22 ist mit den Erhebungen der Spannvorrichtungsbereiche 25 in Eingriff.

Der Spannteil 22 überragt den Spannbereich 10 und ist mit Bereichen der Backplatte 2 im Eingriff, welche insbesondere an den Spannbereich 10 angrenzen und/oder welche insbesondere durch den Spannbereich 10 getrennt und/oder welche insbesondere über den Spannbereich 10 miteinander verbunden sind, sodass diese Bereiche der Backplatten 2 zueinander gespannt oder spannbar sind.

Durch das Festziehen der Schrauben 21 ist die Vorspannung der Backplatten 2 einstellbar.

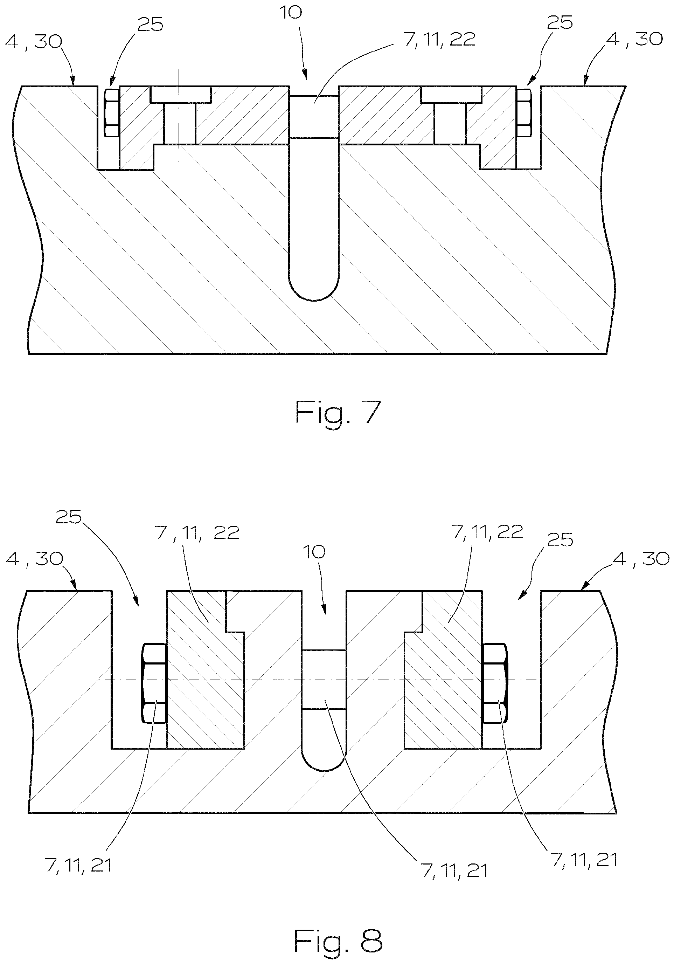

**Figur 7** zeigt eine schematische grafische Darstellung einer siebenten Ausführungsform der erfindungsgemäßen Backplattenvorrichtung 1. Die Merkmale der Ausführungsform gemäß Fig. 7 können bevorzugt den Merkmalen der Ausführungsform gemäß den Figuren 1a, 1b, 1c, 2a, 2b, 2c, 3, 4, 5 und/oder 6 entsprechen.

An der Rückseite 30 der Backplatte 2 sind ein nutförmiger Spannbereich 10, zwei Spannvorrichtungsbereiche 25 und zwei, insbesondere ebenenförmige, plane und/oder glatte, Rückenflächen 4 vorgesehen. Die mindestens eine Spannvorrichtung 7 umfasst zwei L-förmig ausgestaltete Spannteile 22, welche jeweils mit einer Schraube 21 mit der Backplatte 2 verschraubt sind. Die beiden L-förmigen Spannteile 22 sind über eine sogenannte Klemmschraube miteinander verbunden.

Die Spannvorrichtungsbereiche 25 sind als Ausnehmung ausgestaltet. Die Spannvorrichtungsbereiche 25 können jeweils eine Erhebung aufweisen, welche zum formschlüssigen Eingriff mit dem jeweiligen L-förmigen Spannteil 22 ausgebildet ist.

Die Klemmschraube verbindet somit die an den jeweiligen Spannbereich 10 angrenzenden Bereiche, insbesondere die Erhebungen, der Backplatte 2, wodurch diese zueinander spannbar sind.

Ein Teil der Klemmschraube, insbesondere der Kopf der Klemmschraube, ist in einem Spannvorrichtungsbereich 25 und ein weiterer Teil der Klemmschraube, insbesondere die Mutter der Schraube 21, ist in dem anderen Spannvorrichtungsbereich 25 angeordnet.

Durch das Festziehen der Klemmschraube ist die Vorspannung der Backplatte 2 einstellbar. Die maximale Vorspannung der Backplatte 2 ist durch ein nicht gezeigtes Distanzmittel 12, insbesondere ein in dem Spannbereich 10 angeordnetes Einlageblech, vorgegeben und begrenzt.

**Figur 8** zeigt eine schematische grafische Darstellung einer achten Ausführungsform der erfindungsgemäßen Backplattenvorrichtung 1. Die Merkmale der Ausführungsform gemäß Fig. 8 können bevorzugt den Merkmalen der Ausführungsform gemäß den Figuren 1a, 1b, 1c, 2a, 2b, 2c, 3, 4, 5, 6 und/oder 7 entsprechen.

An der Rückseite 30 der Backplatte 2 sind ein nutförmiger Spannbereich 10, zwei Spannvorrichtungsbereiche 25 und zwei, insbesondere ebenenförmige, plane und/oder glatte, Rückenflächen 4 vorgesehen. Die mindestens eine Spannvorrichtung 7 umfasst zwei Spannteile 22. Die beiden Spannteile 22 sind über eine sogenannte Klemmschraube miteinander verbunden.

Die Spannvorrichtungsbereiche 25 sind als Ausnehmung ausgestaltet. Die Spannvorrichtungsbereiche 25 weisen jeweils eine L-förmige Erhebung auf. Die Spannteile 22 sind zum formschlüssigen Eingriff mit den L-förmigen Erhebungen, ausgebildet. Gemäß dieser Ausführungsführungsform sind die L-förmige Erhebungen formschlüssig mit den Spannteil 22 in Eingriff.

Die Klemmschraube verbindet die an den jeweiligen Spannbereich 10 angrenzenden Bereiche der Backplatte 2, wodurch diese zueinander spannbar sind.

Ein Teil der Klemmschraube, insbesondere der Kopf der Klemmschraube, ist in einem Spannvorrichtungsbereich 25 und ein weiterer Teil der Klemmschraube, insbesondere die Mutter der Schraube 21, ist in dem anderen Spannvorrichtungsbereich 25 angeordnet.

Durch das Festziehen der Klemmschraube ist die Vorspannung der Backplatte 2 einstellbar. Die maximale Vorspannung der Backplatte 2 ist durch ein nicht gezeigtes Distanzmittel 12, insbesondere ein in dem Spannbereich 10 angeordnetes Einlageblech, vorgegeben und begrenzt.

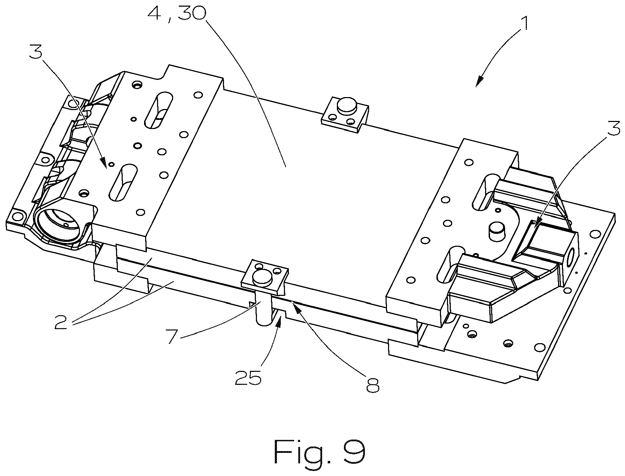

**Figur 9** zeigt eine schematische grafische Darstellung einer neunten, nicht zu der Erfindung gehörenden Ausführungsform einer Backplattenvorrichtung 1. Die Merkmale der Ausführungsform gemäß Fig. 9 können bevorzugt den Merkmalen der Ausführungsform gemäß den Figuren 1a, 1b, 1c, 2a, 2b, 2c, 3, 4, 5, 6, 7 und/oder 8 entsprechen.

Die Rückseite 30 der Backplatte 2, insbesondere die Rückenfläche 4, ist ebenenförmig, plan und glatt ausgestaltet und weist lediglich zwei Spannvorrichtungsbereiche 25 auf. An der Längsseite der Backplatte 2 ist jeweils eine Spannvorrichtung 7 vorgesehen, welche als Klammer ausgestaltet ist. Die Spannvorrichtungen 7 sind mittig an der jeweiligen Längsseite der Backplatte 2 angeordnet. Die Spannvorrichtungen 7 sind gemäß dieser nicht beanspruchten Ausführungsform nicht zwischen der Rückenfläche 4 und der Backfläche 8 und somit nicht innerhalb der Backplatte 2 angeordnet. Die Spannvorrichtungen 7 sind gemäß dieser nicht erfindungsgemäßen Ausführungsform außerhalb der Backplatte 2 angeordnet.

Die Spannvorrichtung 7 ist jeweils mit den beiden Backplatten 2 der Backplattenvorrichtung 1 in Eingriff, wodurch diese zueinander spannbar sind.

Insbesondere ist die Spannvorrichtung 7 mit dem jeweiligen Spannvorrichtungsbereich 25 in Eingriff.

Die Spannvorrichtungen 7 umfassen jeweils eine Spannvorrichtungseinstellvorrichtung, durch welche die Vorspannung der Backplatte 2 einstellbar ist.

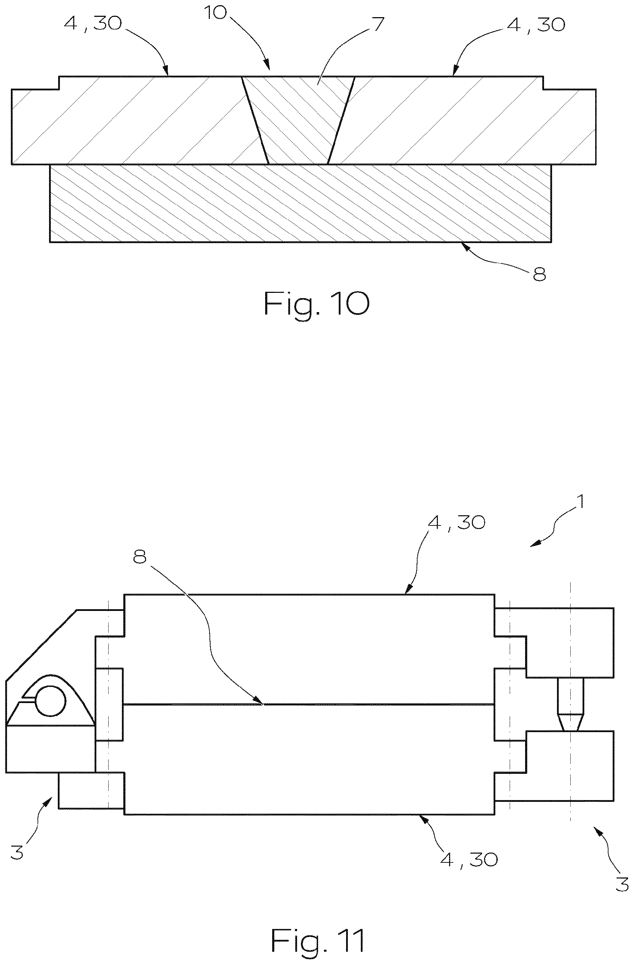

**Figur 10** zeigt eine schematische grafische Darstellung einer zehnten Ausführungsform einer Backplattenvorrichtung 1. Die Merkmale der Ausführungsform gemäß Fig. 10 können bevorzugt den Merkmalen der Ausführungsform gemäß den Figuren 1a, 1b, 1c, 2a, 2b, 2c, 3, 4, 5, 6, 7, 8 und/oder 9 entsprechen.

Die Rückseite 30 der Backplatte 2 weist lediglich einen Spannbereich 10 und zwei, insbesondere ebenenförmige, plane und/oder glatte, Rückenfläche 4 auf.

Hierbei wird im vorgespannten Zustand der Backplatte 2 eine Ausnehmung in die Rückseite 30 gefräst. Die Vorspannung der Backplatte 2 im gefrästen Zustand ist deutlich größer als die benötigte Vorspannung der Backplatte 2 für den Backprozess.

Die Einstellung der Vorspannung der Backplatte 2 erfolgt mittels einer Spannvorrichtung 7, nämlich eines Keiles, der in die Ausnehmung eingesetzt ist. Durch diese Spannvorrichtung 7 wird die Backplatte 2 auseinander getrieben und die Vorspannung der Backplatte 2 ist gezielt einstellbar.

**Figur 11** zeigt eine schematische grafische Darstellung einer elften Ausführungsform einer Backplattenvorrichtung 1. Die Merkmale der Ausführungsform gemäß Fig. 11 können bevorzugt den Merkmalen der Ausführungsform gemäß den Figuren 1a, 1b, 1c, 2a, 2b, 2c, 3, 4, 5, 6, 7, 8, 9 und/oder 10 entsprechen.

Die Rückseiten 30 der Backplatte 2, insbesondere deren Rückenflächen 4, sind ebenenförmig, plan und/oder glatt ausgestaltet. Mit anderen Worten sind die Rückseiten 30, insbesondere die Rückenflächen 4, gemäß dieser Ausführungsform frei von Spannbereichen 10 und Spannvorrichtungsbereichen 25.

Der Normalabstand zwischen der jeweiligen Backfläche 8 und der jeweiligen Rückenfläche 4 beträgt gemäß dieser Ausführungsform 10 cm. Durch die Ausgestaltung der Backplatten 2 können die Backplatten 2 den beim Backen in der Überdruckbackform entstehenden Druck aufnehmen. Die Aufheizung derart massiv ausgestalteter Backplatten 2 erfordert jedoch mehr Energie als die Aufheizung von dünneren Backplatten 2.

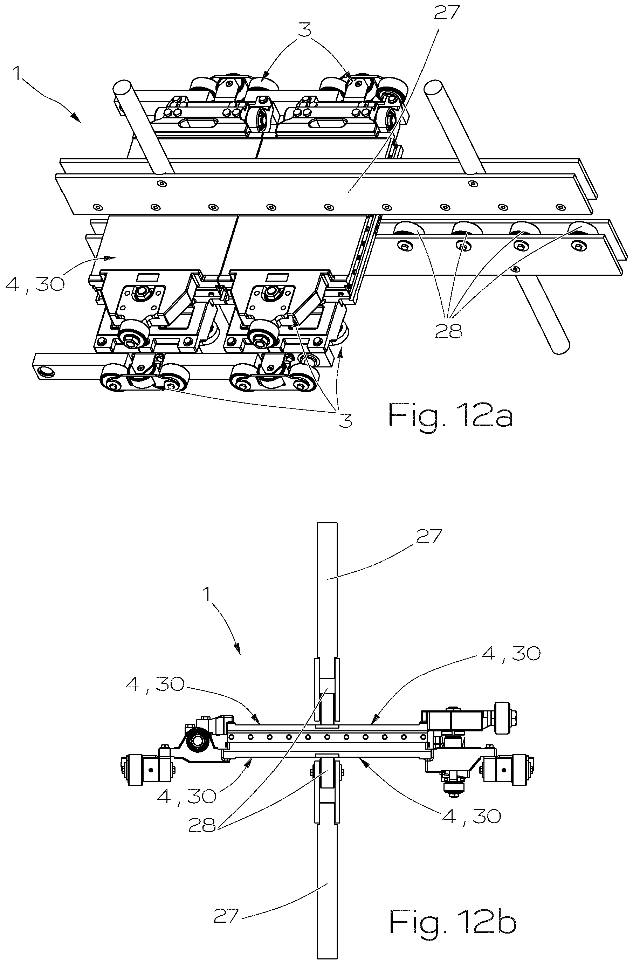

**Figur 12a und 12b** zeigen schematische grafische Darstellungen einer zwölften Ausführungsform einer Backplattenvorrichtung 1. Die Merkmale der Ausführungsform gemäß Fig. 12a und 12b können bevorzugt den Merkmalen der Ausführungsform gemäß den Figuren 1a, 1b, 1c, 2a, 2b, 2c, 3, 4, 5, 6, 7, 8, 9, 10 und/oder 11 entsprechen.

Die Rückseiten 30 der Backplatte 2, insbesondere deren Rückenflächen 4, sind ebenenförmig, plan und/oder glatt ausgestaltet. Mit anderen Worten sind die Rückseiten 30, insbesondere die Rückenflächen 4, frei von Spannbereichen 10 und Spannvorrichtungsbereichen 25.

Der Normalabstand zwischen der Backfläche 8 und der Rückenfläche 4 liegt gemäß dieser Ausführungsform im Bereich von 4 cm. Der beim Backen in der Überdruckbackform entstehende Druck wird gemäß dieser Ausführungsform von einer an der Backvorrichtung 13 angeordneten Druckaufnahmevorrichtung 27 aufgenommen.

Die Druckaufnahmevorrichtung 27 umfasst zur Aufnahme des entstehenden Druckes mindestens eine Feder und Rollen 28, welche an der Rückenfläche 4 der Backplatten 2 abrollen.

Die Druckaufnahmevorrichtung 27 übt mittig eine Kraft, insbesondere einen Druck, auf die Backplattenvorrichtungen 1, insbesondere die Backplatten 2, aus. Mit anderen Worten kann dadurch der beim Backen in der Überdruckbackform entstehende Druck entgegengewirkt werden.

Über die Feder ist die Kraft, insbesondere der Druck, welcher von der Druckaufnahmevorrichtung 27 auf die Backplatte 2 übertragbar ist, und somit gegebenenfalls die Vorspannung der Backplatte einstellbar.

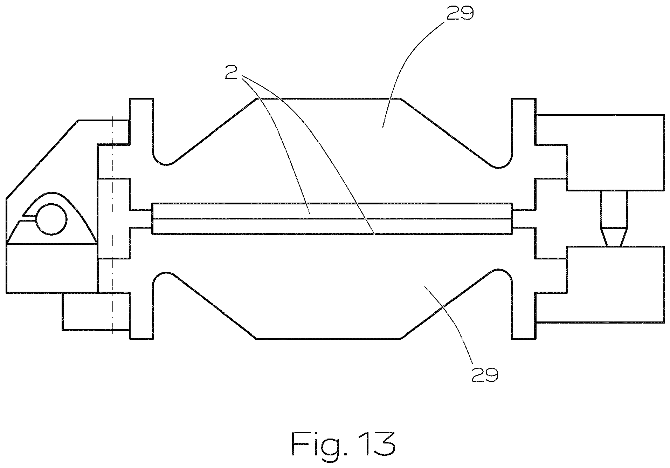

**Figur 13** zeigt eine schematische grafische Darstellung einer dreizehnten Ausführungsform einer Backplattenvorrichtung 1. Die Merkmale der Ausführungsform gemäß Fig. 13 können bevorzugt den Merkmalen der Ausführungsform gemäß den Figuren 1a, 1b, 1c, 2a, 2b, 2c, 3, 4, 5, 6, 7, 8, 9, 10, 11 und/oder 12 entsprechen.

Gemäß dieser Ausführungsform sind die Backplatten 2 in einer Trägerkonstruktion 29 angeordnet. Zwischen der Trägerkonstruktion 29 und der Backplatte 2 können Bleche angeordnet werden, um die Vorspannung der Backplatte 2 einzustellen.

Gemäß dieser Ausführungsform werden die in der Überdruckbackform entstehenden Drücke von der Trägerkonstruktion 29 aufgenommen.

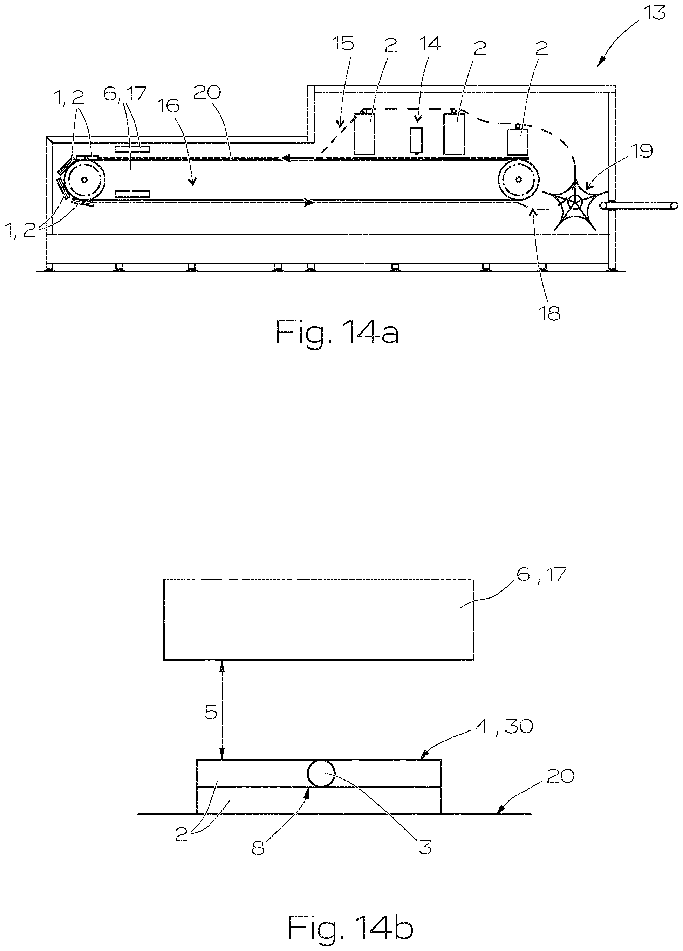

**Figuren 14a** und **14b** zeigen schematische grafische Darstellungen einer Ausführungsform einer erfindungsgemäßen Backvorrichtung 13. Die Merkmale der Backplattenvorrichtung 1 dieser Ausführungsform gemäß Fig. 14a und 14b können bevorzugt den Merkmalen der Ausführungsform gemäß den Figuren 1a, 1b, 1c, 2a, 2b, 2c, 3, 4, 5, 6, 7, 8, 9, 10, 11,12 und/oder 13 entsprechen.

Figur 14b zeigt einen schematischen Ausschnitt der Backvorrichtung 13, in welcher insbesondere der Induktorspalt 5 ersichtlich ist.

Die Backvorrichtung 13, insbesondere der Backofen, ist zur Herstellung unter Überdruck gebackener Formkörper, bevorzugt knusprig spröder Waffeln, aus einer Backmasse eingerichtet.

Die Backvorrichtung 13 umfasst einen Endlosförderer 20, an welchem mehrere Backplattenvorrichtungen 1 angeordnet sind. Durch die Backplatten 2 der Backplattenvorrichtungen 1 wird eine Überdruckbackform gebildet.

Die Backplattenvorrichtungen 1 durchlaufen aneinandergereiht jeweils nacheinander:
- einen Backmassenauftragsbereich 14 zum Auftrag einer Backmasse auf eine geöffnete Backplattenvorrichtung 1, insbesondere auf deren Backplatten 2,
- einen Schließbereich 15 zum Schließen der Backplattenvorrichtungen 1,
- einen Backraum 16 zum Backen der in den geschlossenen Backplattenvorrichtungen 1 befindlichen Backmassen, wobei in dem Backraum 16 mindestens eine Heizvorrichtung 17 zur Beheizung der im Backraum 16 befindlichen Backplattenvorrichtungen 1, insbesondere Backplatten 2, vorgesehen ist,
- einen Öffenbereich 18 zum Öffnen der Backplattenvorrichtungen 1
- und einen Waffelentnahmebereich 19 zur Entnahme der gebackenen Formkörper aus den geöffneten Backplattenvorrichtungen 1.

Die Backplattenvorrichtungen 1 sind gemäß dieser Ausführungsform erfindungsgemäß ausgebildet.

Gemäß dieser Ausführungsform sind die Verbindungsvorrichtungen 3 der Backplattenvorrichtung 1 lediglich schematisch dargestellt. Insbesondere ist nur ein Teil der Verbindungsvorrichtungen 3, nämlich die Rolle, ersichtlich, welche entlang einer Führungsvorrichtung in der Backvorrichtung geführt ist.

Die Heizvorrichtung 17 ist als mindestens eine Induktionsheizvorrichtung 6 ausgebildet und zur induktiven, insbesondere berührungslosen, Beheizung der Backplattenvorrichtungen 1, insbesondere der Backplatten 2, ausgebildet.

Gemäß dieser Ausführungsform heizt die mindestens eine Induktionsheizvorrichtung 6 die Backplatte 2, insbesondere die Rückenfläche 4 der Backplatte 2, über den Induktorspalt 5 auf.

Der Induktorspalt 5 ist von der Heizvorrichtung 17, insbesondere der mindestens einen Induktionsheizvorrichtung 6, und der Rückenfläche 4 der Backplatte 2 gebildet und/oder begrenzt. Mit anderen Worten ist der Induktorspalt 5 von der Fläche der Heizvorrichtung 17, insbesondere der mindestens einen Induktionsheizvorrichtung 6, welche der Rückenfläche 4 der Backplatte 2 zugewandt ist, und der Rückenfläche 4 der Backplatte 2 gebildet und/oder begrenzt.

Der Induktorspalt 5 ist somit zwischen der Heizvorrichtung 17, insbesondere der mindestens einen Induktionsheizvorrichtung 6, und der Rückenfläche 4 der Backplatte 2 angeordnet. Mit anderen Worten ist der Induktorspalt 5 zwischen der Fläche der Heizvorrichtung 17, insbesondere der mindestens einen Induktionsheizvorrichtung 6, welche der Rückenfläche 4 der Backplatte 2 zugewandt ist, und der Rückenfläche 4 der Backplatte 2 angeordnet.

Durch diese beispielhaften Konfigurationen können die erfindungsgemäßen Effekte erzielt werden.

Die Erfindung beschränkt sich nicht auf die dargestellten Ausführungsformen, sondern umfasst jegliche Backvorrichtung 13 gemäß den nachfolgenden Patentansprüchen.

## Patentansprüche

1. **Backvorrichtung** (13), insbesondere Backofen, zur Herstellung unter Überdruck gebackener Formkörper, bevorzugt knusprig spröder Waffeln, aus einer Backmasse, umfassend einen Endlosförderer (20) und mehrere entlang des Endlosförderers (20) vorgesehene Backplattenvorrichtungen (1), die aneinandergereiht jeweils nacheinander:
- einen Backmassenauftragsbereich (14) zum Auftrag einer Backmasse auf eine geöffnete Backplattenvorrichtung (1), insbesondere auf deren Backplatten (2),
- einen Schließbereich (15) zum Schließen der Backplattenvorrichtungen (1),
- einen Backraum (16) zum Backen der in den geschlossenen Backplattenvorrichtungen (1) befindlichen Backmassen, wobei in dem Backraum (16) mindestens eine Heizvorrichtung (17) zur Beheizung der im Backraum (16) befindlichen Backplattenvorrichtungen (1), insbesondere der Backplatten (2), vorgesehen ist,
- einen Öffenbereich (18) zum Öffnen der Backplattenvorrichtungen (1)
- und einen Waffelentnahmebereich (19) zur Entnahme der gebackenen Formkörper aus den geöffneten Backplattenvorrichtungen (1), durchlaufen,
wobei die Backplattenvorrichtungen (1), insbesondere die Backzangen, jeweils: zwei Backplatten (2), und beidseitig der Backplatten (2) angeordnete Verbindungsvorrichtungen (3) umfassen,
- wobei die Verbindungsvorrichtungen (3) derart ausgestaltet sind, dass die Backplattenvorrichtung (1) öffenbar, schließbar und in der geschlossenen Stellung zur Bildung einer Überdruckbackform verriegelbar ausgebildet ist,
- wobei die Backplatten (2) an einer Seite eine der Überdruckbackform zugewandte Backfläche (8) und auf der dieser Seite gegenüberliegenden Seite, insbesondere der Rückseite (30) der Backplatte (2), mindestens eine Rückenfläche (4) aufweisen,
- wobei die Backplattenvorrichtung (1), insbesondere die Backplatten (2), derart ausgestaltet ist, dass sie durch eine über einen Induktorspalt (5) wirkende Induktionsheizvorrichtung (6) aufheizbar ist,
- und wobei die mindestens eine Rückenfläche (4) der Backplattenvorrichtung (1), insbesondere der Backplatten (2), als eine Seite des Induktorspaltes (5) ausgebildet ist,
- wobei die mindestens eine Rückenfläche (4) der Backplatten (2) einer Ebene folgt und insbesondere ebenenförmig ausgebildet ist,
- wobei die Backplatten (2) jeweils mindestens eine Spannvorrichtung (7) zur Vorspannung der jeweiligen Backplatte (2) gegen den beim Backen der Backmasse in der Überdruckbackform entstehenden Druck aufweisen,
- wobei die Heizvorrichtung (17) mindestens eine Induktionsheizvorrichtung (6) umfasst,
- und wobei die mindestens eine Induktionsheizvorrichtung (6) die Backplatte (2), insbesondere die mindestens eine Rückenfläche (4) der Backplatte (2), über den Induktorspalt (5) aufheizt,
**dadurch gekennzeichnet,**
- **dass** die mindestens eine Spannvorrichtung (7) zwischen der mindestens einen Rückenfläche (4) und der Backfläche (8), insbesondere innerhalb der Backplatte (2), angeordnet ist.

2. Backvorrichtung (13) nach Anspruch 1, **dadurch gekennzeichnet, dass** der Normalabstand (9) zwischen der Backfläche (8) und der mindestens einen Rückenfläche (4) im Bereich von 4 cm bis einschließlich 10 cm liegt.

3. Backvorrichtung (13) nach Anspruch 1 oder 2, **dadurch gekennzeichnet,**
- **dass** die mindestens eine Rückenfläche (4) der Backplatten (2) im Wesentlichen plan ausgebildet ist,
- **und/oder dass** die mindestens eine Rückenfläche (4) der Backplatten (2) im Wesentlichen erhebungsfrei ausgebildet ist,
- **und/oder dass** die mindestens eine Rückenfläche (4) der Backplatten (2) im Wesentlichen glatt ausgebildet ist,
- **und/oder dass** die mindestens eine Rückenfläche (4) der Backplatten (2) im Wesentlichen rippenlos ausgebildet ist,
- **und/oder dass** 80 % bis 100 %, insbesondere 80 % bis 95 %, der Rückseite (30) der jeweiligen Backplatte (2) plan, erhebungsfrei, glatt und/oder rippenlos ausgebildet ist.

4. Backvorrichtung (13) nach einem der vorangehenden Ansprüche, **dadurch gekennzeichnet,**
- **dass** an der Rückseite (30), insbesondere an der mindestens einen Rückenfläche (4), der Backplatten (2) mindestens ein Spannbereich (10), insbesondere eine Ausnehmung und/oder eine Nut, vorgesehen ist,
- **dass** die mindestens eine Spannvorrichtung (7) den mindestens einen Spannbereich (10) überragt und/oder durchdringt,
- **dass** die mindestens eine Spannvorrichtung (7) derart ausgestaltet ist, die Backplatte (2) vorzuspannen,
- **und dass** gegebenenfalls die mindestens eine Spannvorrichtung (7) zur Vorspannung der Backplatte (2) mit Bereichen der Backplatten (2) in Eingriff ist, welche insbesondere an den Spannbereich (10) angrenzen und/oder welche insbesondere durch den Spannbereich (10) getrennt und/oder welche insbesondere über den Spannbereich (10) miteinander verbunden sind, sodass diese Bereiche der Backplatten (2) zueinander gespannt oder spannbar sind.

5. Backvorrichtung (13) nach einem der vorangehenden Ansprüche, **dadurch gekennzeichnet, dass** die, insbesondere durch die mindestens eine Spannvorrichtung vorgespannte, Backplatte (2) selbst als Biegeträger zur Aufnahme der beim Backen in der Überdruckbackform ausgehenden Druckkräfte wirkt.

6. Backvorrichtung (13) nach einem der vorangehenden Ansprüche, **dadurch gekennzeichnet,**
- **dass** die mindestens eine Spannvorrichtung (7) derart ausgestaltet ist, dass die Vorspannung der Backplatte (2) einstellbar ist,
- **und/oder dass** die mindestens eine Spannvorrichtung (7) mindestens ein Spannmittel (11), insbesondere mindestens eine Schraube (21) und/oder mindestens einen, insbesondere U-förmigen oder L-förmigen, Spannteil (22), umfasst,
- **und/oder dass** die mindestens eine Spannvorrichtung (7) mindestens ein Distanzmittel (12), insbesondere eine Distanzscheibe, mindestens ein Einlageblech, mindestens eine Passscheibe (24), mindestens eine Stellschraube und/oder mindestens eine Hülse (23), umfasst.

7. Backvorrichtung (13) nach einem der vorangehenden Ansprüche, **dadurch gekennzeichnet,**
- **dass** an der Rückseite (30), insbesondere an der mindestens einen Rückenfläche (4), der Backplatten (2) zwei bis einschließlich zehn Spannbereiche (10), insbesondere zwei bis einschließlich zehn Ausnehmungen und/oder zwei bis einschließlich zehn Nuten, vorgesehen sind,
- **und/oder dass** die Backplatten (2) jeweils, zwei bis einschließlich zehn Spannvorrichtungen (7) zur Vorspannung der jeweiligen Backplatte (2) gegen den beim Backen der Backmasse in der Überdruckbackform entstehenden Druck aufweisen,
- **dass** gegebenenfalls die zwei bis einschließlich zehn Spannvorrichtungen (7) zwischen der mindestens einen Rückenfläche (4) und der Backfläche (8), insbesondere innerhalb, der Backplatten (2), angeordnet sind,
- **dass** gegebenenfalls die zwei bis einschließlich zehn Spannvorrichtungen (7) den jeweiligen mindestens einen Spannbereich (10) überragen und/oder durchdringen,
- **und dass** gegebenenfalls die Spannvorrichtungen (7) zur Vorspannung der Backplatten (2) mit den über den jeweiligen Spannbereich (10) verbundenen Bereichen der Backplatten (2) in Eingriff sind, sodass die jeweiligen Bereiche der Backplatten (2) zueinander gespannt oder spannbar sind.

8. Backvorrichtung (13) nach einem der vorangehenden Ansprüche, **dadurch gekennzeichnet,**
- **dass** eine Verbindungsvorrichtung (3) als Scharnier ausgebildet ist,
- **und/oder dass** die andere Verbindungsvorrichtung (3) als Verriegelungsvorrichtung ausgebildet ist,
- **und/oder dass** die Backplattenvorrichtung (1) als Backzange ausgebildet ist,
- **und/oder dass** zur Bildung der Überdruckbackform mindestens eine Abschlussleiste, wie insbesondere mindestens eine Dichtleiste und/oder mindestens eine Dampfleiste, vorgesehen ist,
- **und/oder dass** die Backmasse im unausgebackenen Zustand 45% bis einschließlich 70% Wasser enthält.

9. **Backvorrichtung** (13) nach Anspruch 1,
**dadurch gekennzeichnet,**
- **dass** die mindestens eine Rückenfläche (4) der Backplatten (2) einer Ebene folgt und ebenenförmig, plan und/oder glatt ausgebildet ist,
- **und dass** der Normalabstand (9) zwischen der Backfläche (8) und der mindestens einen Rückenfläche (4) im Bereich von 7 cm bis einschließlich 12 cm liegt.

10. Backvorrichtung (13) nach einem der vorangegangenen Ansprüche, **dadurch gekennzeichnet,**
- **dass** die mindestens eine Induktionsheizvorrichtung (6) zur induktiven, insbesondere berührungslosen, Beheizung der Backplattenvorrichtungen (1), insbesondere der Backplatten (2), ausgebildet ist.

11. Backvorrichtung (13) nach einem der vorangegangenen Ansprüche, **dadurch gekennzeichnet,**
- **dass** der Induktorspalt (5) von der Heizvorrichtung (17), insbesondere der mindestens einen Induktionsheizvorrichtung (6), und der mindestens einen Rückenfläche (4) der Backplatte (2) gebildet und/oder begrenzt ist,
- **und/oder dass** der Induktorspalt (5) von der Fläche der Heizvorrichtung (17), insbesondere der mindestens einen Induktionsheizvorrichtung (6), welche der mindestens einen Rückenfläche (4) der Backplatte (2) zugewandt ist, und der mindestens einen Rückenfläche (4) der Backplatte (2) gebildet und/oder begrenzt ist,
- **und/oder dass** der Induktorspalt (5) zwischen der Heizvorrichtung (17), insbesondere der mindestens einen Induktionsheizvorrichtung (6), und der mindestens einen Rückenfläche (4) der Backplatte (2) angeordnet ist,
- **und/oder dass** der Induktorspalt (5) zwischen der Fläche der Heizvorrichtung (17), insbesondere der mindestens einen Induktionsheizvorrichtung (6), welche der mindestens einen Rückenfläche (4) der Backplatte (2) zugewandt ist, und der mindestens einen Rückenfläche (4) der Backplatte (2) angeordnet ist.

## Claims

1. A **baking device** (13), in particular a baking oven, for producing moulded bodies baked under overpressure, preferably crispy brittle wafers, from a baking mass, comprising an endless conveyor (20) and a plurality of baking plate devices (1) provided along the endless conveyor (20) and arranged successively, one after the other, passing through:
- a baking mass application region (14) for applying a baking mass to an opened baking plate device (1), in particular to its baking plates (2),
- a closing region (15) for closing the baking plate devices (1),
- a baking chamber (16) for baking the baking masses located in the closed baking plate devices (1), wherein at least one heating device (17) is provided in the baking chamber (16) for heating the baking plate devices (1) located in the baking chamber (16), in particular the baking plates (2),
- an opening region (18) for opening the baking plate devices (1),
- and a wafer removal region (19) for removing the baked moulded bodies from the opened baking plate devices (1),
wherein the baking plate devices (1), in particular the baking tongs, each comprise: two baking plates (2), and connecting devices (3) arranged on both sides of the baking plates (2),
- wherein the connecting devices (3) are designed in such a way that the baking plate device (1) is openable, closable and lockable in the closed position to form an overpressure baking mould,
- wherein the baking plates (2) have a baking surface (8) facing the overpressure baking mould on one side and at least one back surface (4) on the opposite side, in particular the back side (30) of the baking plate (2),
- wherein the baking plate device (1), in particular the baking plates (2), is designed in such a way that it is heatable by an induction heating device (6) acting via an inductor gap (5),
- and wherein the at least one back surface (4) of the baking plate device (1), in particular of the baking plates (2), is formed as one side of the inductor gap (5),
- wherein the at least one back surface (4) of the baking plates (2) follows a plane and is, in particular, plane-shaped,
- wherein the baking plates (2) each have at least one tensioning device (7) for pretensioning the respective baking plate (2) against the pressure arising during baking of the baking mass in the overpressure baking mould,
- wherein the heating device (17) comprises at least one induction heating device (6),
- and wherein the at least one induction heating device (6) heats the baking plate (2), in particular the at least one back surface (4) of the baking plate (2), via the inductor gap (5),
**characterised**
- **in that** the at least one tensioning device (7) is arranged between the at least one back surface (4) and the baking surface (8), in particular within the baking plate (2),

2. The baking device (13) according to claim 1, **characterised in that** the **normal** distance (9) between the baking surface (8) and the at least one back surface (4) is in the range of 4 cm up to and including 10 cm.

3. The baking device (13) according to claim 1 or 2, **characterised**
- **in that** the at least one back surface (4) of the baking plates (2) is designed to be substantially flat,
- **and/or in that** the at least one back surface (4) of the baking plates (2) is designed to be substantially free of elevation,
- **and/or in that** the at least one back surface (4) of the baking plates (2) is designed to be substantially smooth,
- **and/or in that** the at least one back surface (4) of the baking plates (2) is designed to be substantially finless,
- **and/or in that** 80 % to 100 %, in particular 80 % to 95 %, of the back side (30) of the respective baking plate (2) is flat, free of elevations, smooth and/or finless.

4. The baking device (13) according to one of the preceding claims, **characterised**
- **in that** at least one tensioning region (10), in particular a cavity and/or a groove, is provided on the back side (30), in particular on the at least one back surface (4), of the baking plates (2),
- **in that** the at least one tensioning device (7) projects beyond and/or penetrates the at least one tensioning region (10),
- **in that** the at least one tensioning device (7) is designed for pretensioning the baking plate (2),
- **and in that**, optionally, the at least one tensioning device (7) for pretensioning the baking plate (2) engages with regions of the baking plates (2) which, in particular, are adjacent to the tensioning region (10) and/or which, in particular, are separated by the tensioning region (10) and/or which, in particular, are connected to one another via the tensioning region (10), so that these regions of the baking plates (2) are tensioned or tensionable relative to each other.

5. The baking device (13) according to one of the preceding claims, **characterised in that** the baking plate (2), which is pretensioned in particular by the at least one tensioning device, itself acts as a bending support for absorbing the pressure forces emanating during baking in the overpressure baking mould.

6. The baking device (13) according to one of the preceding claims, **characterised**
- **in that** the at least one tensioning device (7) is designed in such a way that the pretensioning of the baking plate (2) is adjustable,
- **and/or in that** the at least one tensioning device (7) comprises at least one tensioning means (11), in particular at least one screw (21) and/or at least one, in particular U-shaped or L-shaped, tensioning member (22),
- **and/or in that** the at least one tensioning device (7) comprises at least one spacer means (12), in particular a spacer washer, at least one insert plate, at least one shim washer (24), at least one adjusting screw and/or at least one sleeve (23).

7. The baking device (13) according to one of the preceding claims, **characterised**
- **in that** two up to and including ten tensioning regions (10), in particular two up to and including ten cavities and/or two up to and including ten grooves, are provided on the back side (30), in particular on the at least one back surface (4), of the baking plates (2),
- **and/or in that** the baking plates (2) each have two up to and including ten tensioning devices (7) for pretensioning the respective baking plate (2) against the pressure arising during baking of the baking mass in the overpressure baking mould,
- **in that,** optionally, the two up to and including ten tensioning devices (7) are arranged between the at least one back surface (4) and the baking surface (8), in particular within the baking plates (2),
- **in that,** optionally, the two up to and including ten tensioning devices (7) project beyond and/or penetrate the respective at least one tensioning region (10),
- **and in that**, optionally, the tensioning devices (7) for pretensioning the baking plates (2) are engaged with the regions of the baking plates (2) connected via the respective tensioning region (10), so that the respective regions of the baking plates (2) are tensioned or tensionable relative to each other.

8. The baking device (13) according to one of the preceding claims, **characterised**
- **in that** a connecting device (3) is formed as a hinge,
- **and/or in that** the other connecting device (3) is formed as a locking device,
- **and/or in that** the baking plate device (1) is formed as baking tongs,
- **and/or in that** at least one closing strip, such as in particular at least one sealing strip and/or at least one steam strip, is provided to form the overpressure baking mould,
- **and/or in that** the baking mass contains 45 % up to and including 70 % water in the unbaked state.

9. The **baking device** (13) according to claim 1,
**characterised**
- **in that** the at least one back surface (4) of the baking plates (2) follows a plane and is plane-shaped, flat and/or smooth,
- **and in that** the normal distance (9) between the baking surface (8) and the at least one back surface (4) is in the range of 7 cm up to and including 12 cm.

10. The baking device (13) according to one of the preceding claims, **characterised**
- **in that** the at least one induction heating device (6) is designed for inductive, in particular contactless, heating of the baking plate devices (1), in particular of the baking plates (2).

11. The baking device (13) according to one of the preceding claims, **characterised**
- **in that** the inductor gap (5) is formed and/or limited by the heating device (17), in particular the at least one induction heating device (6), and the at least one back surface (4) of the baking plate (2),
- **and/or in that** the inductor gap (5) is formed and/or limited by the surface of the heating device (17), in particular the at least one induction heating device (6) facing the at least one back surface (4) of the baking plate (2), and the at least one back surface (4) of the baking plate (2),
- **and/or in that** the inductor gap (5) is arranged between the heating device (17), in particular the at least one induction heating device (6), and the at least one back surface (4) of the baking plate (2),
- **and/or in that** the inductor gap (5) is arranged between the surface of the heating device (17), in particular the at least one induction heating device (6) facing the at least one back surface (4) of the baking plate (2), and the at least one back surface (4) of the baking plate (2).

## Revendications

1. **Dispositif de cuisson** (13), en particulier four de cuisson, pour la fabrication de corps moulés cuits sous surpression, de préférence de gaufrettes croustillantes et cassantes, à partir d'une masse de cuisson, comprenant un convoyeur sans fin (20) et plusieurs dispositifs de plaques de cuisson (1) prévus le long du convoyeur sans fin (20),qui, alignés les uns à la suite des autres, passent chacun successivement:
- une zone d'application de masse de cuisson (14) pour appliquer une masse de cuisson sur un dispositif de plaques de cuisson (1) ouvert, en particulier sur ses plaques de cuisson (2),
- une zone de fermeture (15) pour fermer les dispositifs de plaques de cuisson (1),
- une chambre de cuisson (16) pour cuire les masses de cuisson contenues dans les dispositifs de plaques de cuisson (1) fermés, au moins un dispositif de chauffage (17) étant prévu dans la chambre de cuisson (16) pour chauffer les dispositifs de plaques de cuisson (1) contenus dans la chambre de cuisson (16), en particulier les plaques de cuisson (2),
- une zone d'ouverture (18) pour ouvrir les dispositifs de plaques de cuisson (1),
- et une zone de retrait des gaufrettes (19) pour retirer les corps moulés cuits des dispositifs de plaques de cuisson (1) ouverts,
dans lequel les dispositifs de plaques de cuisson (1), en particulier les pinces de cuisson, comprennent chacun: deux plaques de cuisson (2) et des dispositifs de liaison (3) disposés des deux côtés des plaques de cuisson (2),
- dans lequel les dispositifs de liaison (3) sont réalisés de telle sorte que le dispositif de plaque de cuisson (1) est configuré de manière ouvrable, fermable et verrouillable dans la position fermée pour former un moule de cuisson à surpression,
- dans lequel les plaques de cuisson (2) présentent sur une face une surface de cuisson (8) tournée vers le moule de cuisson à surpression et sur la face opposée à cette face, en particulier la face arrière (30) de la plaque de cuisson (2), au moins une surface arrière (4),
- dans lequel le dispositif de plaques de cuisson (1), en particulier les plaques de cuisson (2), est réalisé de telle sorte qu'il est chauffable par un dispositif de chauffage par induction (6) agissant via une fente d'inducteur (5),
- et dans lequel la au moins une surface arrière (4) du dispositif de plaques de cuisson (1), en particulier des plaques de cuisson (2), est configurée comme un côté de la fente d'inducteur (5),
- dans lequel la au moins une surface arrière (4) des plaques de cuisson (2) suit un plan et est en particulier configurée en forme de plan,
- dans lequel les plaques de cuisson (2) présentent chacune au moins un dispositif de tension (7) pour précontraindre la plaque de cuisson (2) respective contre la pression générée lors de la cuisson de la masse de cuisson dans le moule de cuisson à surpression,
- dans lequel le dispositif de chauffage (17) comprend au moins un dispositif de chauffage par induction (6),
- et dans lequel le au moins un dispositif de chauffage par induction (6) chauffe la plaque de cuisson (2), en particulier la au moins une surface arrière (4) de la plaque de cuisson (2), par l'intermédiaire de la fente d'inducteur (5),
**caractérisé**
- **en ce que** le au moins un dispositif de tension (7) est disposé entre la au moins une surface arrière (4) et la surface de cuisson (8), en particulier à l'intérieur de la plaque de cuisson (2).

2. Dispositif de cuisson (13) selon la revendication 1, **caractérisé en ce que** la distance normale (9) entre la surface de cuisson (8) et la au moins une surface arrière (4) est comprise dans la plage de 4 cm à 10 cm inclus.

3. Dispositif de cuisson (13) selon la revendication 1 ou 2, **caractérisé**
- **en ce que** la au moins une surface arrière (4) des plaques de cuisson (2) est configurée de manière substantiellement plane,
- **et/ou en ce que** la au moins une surface arrière (4) des plaques de cuisson (2) est configurée substantiellement sans élévation,
- **et/ou en ce que** la au moins une surface arrière (4) des plaques de cuisson (2) est configurée substantiellement lisse,
- **et/ou en ce que** la au moins une surface arrière (4) des plaques de cuisson (2) est configurée substantiellement sans nervures,
- **et/ou en ce que** 80 % à 100 %, en particulier 80 % à 95 %, de la face arrière (30) de la plaque de cuisson (2) respective est configuré de manière plane, sans élévation, lisse et/ou sans nervure.

4. Dispositif de cuisson (13) selon l'une des revendications précédentes, **caractérisé**
- **en ce que** sur la face arrière (30), en particulier sur la au moins une surface arrière (4), des plaques de cuisson (2) est prévue au moins une zone de tension (10), en particulier un évidement et/ou une rainure,
- **en ce que** le au moins un dispositif de tension (7) dépasse et/ou traverse la au moins une zone de tension (10),
- **en ce que** le au moins un dispositif de tension (7) est réalisé de manière à précontraindre la plaque de cuisson (2),
- **et en ce que,** éventuellement, le au moins un dispositif de tension (7) pour la précontrainte de la plaque de cuisson (2) est engagé avec des zones des plaques de cuisson (2) qui sont en particulier adjacentes à la zone de tension (10) et/ou qui sont en particulier séparées par la zone de tension (10) et/ou qui sont en particulier reliées entre elles par la zone de tension (10), de sorte que ces zones des plaques de cuisson (2) sont tendues ou tendables entre elles.

5. Dispositif de cuisson (13) selon l'une des revendications précédentes, **caractérisé en ce que** la plaque de cuisson (2), en particulier précontrainte par le au moins un dispositif de tension, agit elle-même comme support de flexion pour absorber les forces de pression provenant de la cuisson dans le moule de cuisson à surpression.

6. Dispositif de cuisson (13) selon l'une des revendications précédentes, **caractérisé**
- **en ce que** le au moins un dispositif de tension (7) est réalisé de telle sorte que la précontrainte de la plaque de cuisson (2) est réglable,
- **et/ou en ce que** le au moins un dispositif de tension (7) comprend au moins un moyen de tension (11), en particulier au moins une vis (21) et/ou au moins un élément de tension (22), en particulier en forme de U ou de L,
- et/ou en ce que le au moins un dispositif de tension (7) comprend au moins un moyen d'écartement (12), en particulier un disque d'écartement, au moins une tôle d'insertion, au moins une rondelle d'ajustement (24), au moins une vis de réglage et/ou au moins un manchon (23).

7. Dispositif de cuisson (13) selon l'une des revendications précédentes, **caractérisé**
- **en ce que** sur la face arrière (30), en particulier sur la au moins une surface arrière (4), des plaques de cuisson (2) sont prévues deux à dix zones de tension (10) incluses, en particulier deux à dix évidements inclus et/ou deux à dix rainures incluses,
- **et/ou en ce que** les plaques de cuisson (2) présentent respectivement deux à dix dispositifs de tension (7) inclus pour la précontrainte de la plaque de cuisson (2) respective contre la pression générée lors de la cuisson de la masse de cuisson dans le moule de cuisson à surpression,
- **en ce que,** éventuellement, les deux à dix dispositifs de tension (7) inclus sont disposés entre la au moins une surface arrière (4) et la surface de cuisson (8), en particulier à l'intérieur des plaques de cuisson (2),
- **en ce que,** éventuellement, les deux à dix dispositifs de tension (7) inclus dépassent et/ou traversent l'au moins une zone de tension (10) respective,
- **et en ce que,** éventuellement, les dispositifs de tension (7) pour la précontrainte des plaques de cuisson (2) sont engagés avec les zones des plaques de cuisson (2) reliées par la zone de tension (10) respective, de sorte que les zones des plaques de cuisson (2) respectives sont tendues ou tendables entre elles.

8. Dispositif de cuisson (13) selon l'une des revendications précédentes, **caractérisé**
- **en ce que** un dispositif de liaison (3) est configuré comme une charnière,
- **et/ou en ce que** l'autre dispositif de liaison (3) est configuré comme dispositif de verrouillage,
- **et/ou en ce que** le dispositif de plaques de cuisson (1) est configuré comme une pince de cuisson,
- **et/ou en ce que** pour former le moule de cuisson à surpression, au moins une baguette de délimitation, comme en particulier au moins une baguette d'étanchéité et/ou au moins une baguette de vapeur, est prévue,
- **et/ou en ce que** la masse de cuisson contient, à l'état non cuit, de 45 % à 70 % inclus d'eau.

9. **Dispositif de cuisson** (13) selon la revendication 1,
**caractérisé**
- **en ce que** la au moins une surface arrière (4) des plaques de cuisson (2) suit un plan et est configurée en forme de plan, plane et/ou lisse,
- **et en ce que** la distance normale (9) entre la surface de cuisson (8) et la au moins une surface arrière (4) est comprise dans la plage de 7 cm à 12 cm inclus.

10. Dispositif de cuisson (13) selon l'une des revendications précédentes, **caractérisé**
- **en ce que** le au moins un dispositif de chauffage par induction (6) est configuré pour le chauffage inductif, en particulier sans contact, des dispositifs de plaques de cuisson (1), en particulier des plaques de cuisson (2).

11. Dispositif de cuisson (13) selon l'une des revendications précédentes, **caractérisé**
- **en ce que** la fente d'inducteur (5) est formée et/ou délimitée par le dispositif de chauffage (17), en particulier le au moins un dispositif de chauffage par induction (6), et la au moins une surface arrière (4) de la plaque de cuisson (2),
- **et/ou en ce que** la fente d'inducteur (5) est formée et/ou délimitée par la surface du dispositif de chauffage (17), en particulier du au moins un dispositif de chauffage par induction (6), qui est tournée vers la au moins une surface arrière (4) de la plaque de cuisson (2), et la au moins une surface arrière (4) de la plaque de cuisson (2),
- **et/ou en ce que** la fente d'inducteur (5) est disposée entre le dispositif de chauffage (17), en particulier le au moins un dispositif de chauffage par induction (6), et la au moins une surface arrière (4) de la plaque de cuisson (2),
- **et/ou en ce que** la fente d'inducteur (5) est disposée entre la surface du dispositif de chauffage (17), en particulier du au moins un dispositif de chauffage par induction (6), qui est tournée vers la au moins une surface arrière (4) de la plaque de cuisson (2), et la au moins une surface arrière (4) de la plaque de cuisson (2).
